# EUROPEAN PATENT SPECIFICATION

(11) **EP 4 450 023 B1**
(45) Date of publication and mention of the grant of the patent: **08.04.2026**
(21) Application number: 24171019.3
(22) Date of filing: 18.04.2024
(51) Int. Cl.: A61C 11/00

(54) **DATA GENERATING APPARATUS, DATA GENERATING METHOD, AND DATA GENERATING PROGRAM**
DATENERZEUGUNGSVORRICHTUNG, DATENERZEUGUNGSVERFAHREN UND DATENERZEUGUNGSPROGRAMM
APPAREIL DE GÉNÉRATION DE DONNÉES, PROCÉDÉ DE GÉNÉRATION DE DONNÉES ET PROGRAMME DE GÉNÉRATION DE DONNÉES

(30) Priority: 21.04.2023 JP 2023069964
(43) Date of publication of application: 23.10.2024
(73) Proprietor: J. MORITA MFG. CORP., Fushimi-ku Kyoto-shi Kyoto 612-8533 (JP)
(72) Inventor: KAJI, Ryosuke, Kyoto-shi, Kyoto, 612-8533 (JP); YOSHIKAWA, Hideki, Kyoto-shi, Kyoto, 612-8533 (JP); NISHIMURA, Mikinori, Kyoto-shi, Kyoto, 612-8533 (JP)
(74) Representative: Müller Hoffmann & Partner

(56) References cited:
- CN-A- 109 414 305
- JP-B2- 6 871 212
- US-A1- 2014 379 356

## Description

### BACKGROUND OF THE DISCLOSURE

### Field of the Disclosure

The present disclosure relates to a data generating apparatus, a data generating method, and a data generating program for generating video data. The present application claims priority based on Japanese Patent Application No. 2023-069964 filed on April 21, 2023.

### Description of the Background Art

It is of clinical importance to know the premature contact position upon occlusion of upper and lower rows of teeth. The upper and lower rows of teeth include a row of teeth in an upper jaw and a row of teeth in a lower jaw. When the upper and lower rows of teeth are in an open state, the row of teeth in the upper jaw and the row of teeth in the lower jaw are separated from each other. When the upper and lower rows of teeth are in an occlusal state, at least a part of the row of teeth in the upper jaw and at least a part of the row of teeth in the lower jaw are in contact with each other. The premature contact position is a position at which the row of teeth in the upper jaw and the row of teeth in the lower jaw first contact each other when the upper and lower rows of teeth are in the occlusal state. In the case where there is an imbalance in a position where the upper row of teeth prematurely contacts the lower row of teeth, mastication (chewing) occurs more frequently at this premature contact position, which may cause adverse effects on health due to distortion of the jaws or loss of balance of the body. In the dental field, treatments such as drilling of a tooth at the premature contact position are conducted in order to allow the entire row of teeth in the upper jaw to contact the entire row of teeth in the lower jaw in a simultaneous and balanced manner.

As a technique for checking the premature contact position, Chinese Patent Application Publication No. 115546405 discloses a method of indicating a premature contact position on three-dimensional data by associating the position of contact, which has been detected using occlusal paper, between the upper and lower rows of teeth in the occlusal state with the three-dimensional data of the upper and lower rows of teeth.

US 2014/0379356 A1 and CN 109 414 305 A1 relate both to the simulation of jaw and tooth movements for orthodontic treatments.

### SUMMARY OF THE DISCLOSURE

According to the method disclosed in Chinese Patent Application Publication No. 115546405, the premature contact position can be indicated on the three-dimensional data, but a jaw motion causes a change in the positional relation between the row of teeth in the upper jaw and the row of teeth in the lower jaw. Thus, if the position of contact between the upper and lower rows of teeth can be checked while considering the positional relation between the row of teeth in the upper jaw and the row of teeth in the lower jaw, an operator such as a dentist can prepare a treatment plan more accurately. In the method disclosed in Chinese Patent Application Publication No. 115546405, however, no consideration is given to the jaw motion, which prevents an operator from checking the position of contact between the upper and lower rows of teeth according to the positional relation between the rows of teeth in the upper and lower jaws during the jaw motion.

The present disclosure has been made to solve the above-described problems, and an object of the present disclosure is to provide a technique by which a position of contact between upper and lower rows of teeth can be checked according to the positional relation between the rows of teeth in upper and lower jaws during a jaw motion.

This is achieved by the claimed subject-matter which defines the present invention. Embodiments not covered by the claimed subject-matter do not form part of the invention.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing an application example of a data generating apparatus according to a first embodiment.
Fig. 2 is a block diagram showing a hardware configuration of the data generating apparatus according to the first embodiment.
Fig. 3 is a diagram for illustrating an example of a frame of video data generated by the data generating apparatus according to the first embodiment.
Fig. 4 is a diagram for illustrating addition of colors according to a distance between a prescribed point constituting a row of teeth in an upper jaw and a prescribed point constituting a row of teeth in a lower jaw.
Fig. 5 is a diagram for illustrating calculation of the distance between the prescribed point constituting the row of teeth in the upper jaw and the prescribed point constituting the row of teeth in the lower jaw.
Fig. 6 is a diagram for illustrating an example of each frame of the video data generated by the data generating apparatus according to the first embodiment.
Fig. 7 is a diagram for illustrating an example of each frame of the video data generated by the data generating apparatus according to the first embodiment.
Fig. 8 is a diagram for illustrating an example of each frame of the video data generated by the data generating apparatus according to the first embodiment.
Fig. 9 is a diagram for illustrating an example of a setting related to a video reproduced by the data generating apparatus according to the first embodiment.
Fig. 10 is a flowchart for illustrating an example of data generation processing executed by the data generating apparatus according to the first embodiment.
Fig. 11 is a diagram for illustrating an example of an indicator added to video data by a data generating apparatus according to a second embodiment.
Fig. 12 is a diagram for illustrating an example of an indicator added to video data by a data generating apparatus according to a third embodiment.
Fig. 13 is a diagram for illustrating an example of an indicator added to video data by a data generating apparatus according to a fourth embodiment.
Fig. 14 is a diagram for illustrating an example of an indicator added to video data by a data generating apparatus according to a fifth embodiment.
Fig. 15 is a diagram for illustrating an example of an indicator added to video data by a data generating apparatus according to a sixth embodiment.
Fig. 16 is a diagram for illustrating an example of an indicator added to video data by a data generating apparatus according to a seventh embodiment.

### DESCRIPTION OF THE PREFERRED EMBODIMENTS

### <First Embodiment>

The first embodiment of the present disclosure will be hereinafter described in detail with reference to the accompanying drawings. In the accompanying drawings, the same or corresponding portions will be denoted by the same reference characters, and the description thereof will not be repeated.

### [Application Example]

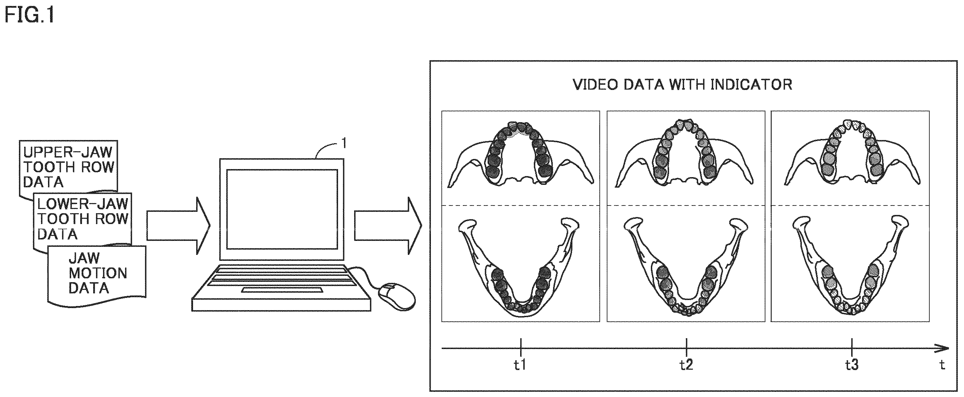

The following describes an application example of a data generating apparatus 1 according to the first embodiment with reference to Fig. 1. Fig. 1 is a diagram showing an application example of data generating apparatus 1 according to the first embodiment.

It is of clinical importance to know the premature contact position upon occlusion of upper and lower rows of teeth. In the case where there is an imbalance in a position where the upper row of teeth prematurely contacts the lower row of teeth, mastication (chewing) occurs more frequently at this premature contact position, which may cause adverse effects on health due to distortion of the jaws or loss of balance of the body. In the dental field, treatments such as drilling of a tooth at the premature contact position are conducted in order to allow the entire row of teeth in the upper jaw to contact the entire row of teeth in the lower jaw in a simultaneous and balanced manner.

A jaw motion causes a change in the positional relation between the row of teeth in the upper jaw and the row of teeth in the lower jaw. Thus, if the position of contact between the upper and lower rows of teeth can be checked while considering the positional relation between the row of teeth in the upper jaw and the row of teeth in the lower jaw, an operator such as a dentist can prepare a treatment plan more accurately. Accordingly, data generating apparatus 1 according to the first embodiment is configured to allow a user to check the position of contact between the upper and lower rows of teeth according to the positional relation between the rows of teeth in the upper and lower jaws during the jaw motion. The user of data generating apparatus 1 is not limited to an operator such as a dentist but includes a dental assistant, a professor or a student of a dental university, a dental technician, and the like. Further, a subject as a target for which the premature contact position is checked by data generating apparatus 1 includes a patient at a dental clinic, a subject in a dental university, and the like.

As shown in Fig. 1, data generating apparatus 1 acquires: upper-jaw tooth row data showing a three-dimensional shape of a row of teeth in an upper jaw of the subject; lower-jaw tooth row data showing a three-dimensional shape of a row of teeth in a lower jaw of the subject; and jaw motion data showing a jaw motion of the subject.

The upper-jaw tooth row data is three-dimensional data including position information about each point in a point cloud constituting a surface of the row of teeth in the upper jaw. The lower-jaw tooth row data is three-dimensional data including position information about each of points in a point cloud constituting a surface of the row of teeth in the lower jaw. The user can acquire the upper-jaw tooth row data and the lower-jaw tooth row data by scanning the inside of the oral cavity of a subject through a three-dimensional scanner (an optical scanner) (not shown). The three-dimensional scanner is what is called an intra oral scanner (IOS) capable of optically capturing an image of the inside of the oral cavity of the subject by a confocal method, a triangulation method, or the like. By scanning an object in the oral cavity, the three-dimensional scanner acquires, as three-dimensional data (IOS data), coordinates (X, Y, Z) of each of points in a point cloud (a plurality of points) representing a surface shape of a scan target (for example, a row of teeth in the upper jaw and a row of teeth in the lower jaw) in a lateral direction (an X-axis direction), a longitudinal direction (a Y-axis direction), and a height direction (a Z-axis direction) that are determined in advance.

In other words, the upper-jaw tooth row data includes position information about each point in a point cloud constituting the surface of at least one tooth included in the row of teeth in the upper jaw located in a certain coordinate space. The lower-jaw tooth row data includes position information about each point in a point cloud constituting the surface of at least one tooth included in the row of teeth in the lower jaw located in a certain coordinate space. The upper-jaw tooth row data may include not only at least one tooth included in the row of teeth in the upper jaw but also the position information about each point in a point cloud constituting a surface of a gum located around this at least one tooth. Further, the lower-jaw tooth row data may include not only at least one tooth included in the row of teeth in the lower jaw but also the position information about each point in a point cloud constituting a surface of a gum located around this at least one tooth.

The upper-jaw tooth row data is not limited to the above-mentioned IOS data, but may be three-dimensional data obtained by computed tomography of the row of teeth in the upper jaw. The lower-jaw tooth row data is not limited to the above-mentioned IOS data, but may be three-dimensional data obtained by computed tomography of the row of teeth in the lower jaw. The user can acquire the upper-jaw tooth row data and the lower-jaw tooth row data by computed tomography of the face of the subject using a computed tomography (CT) imaging apparatus (not shown). The CT imaging apparatus is an X-ray imaging apparatus that rotates a transmitter and a receiver of X-rays, which are a type of radiation, around the face of a patient to perform computed tomography of an upper jaw and a lower jaw of the patient. By computed tomography of the upper and lower jaws of the subject, the CT imaging apparatus acquires three-dimensional volume (voxel) data of the scan target (for example, the upper and lower jaws) as three-dimensional data (CT data).

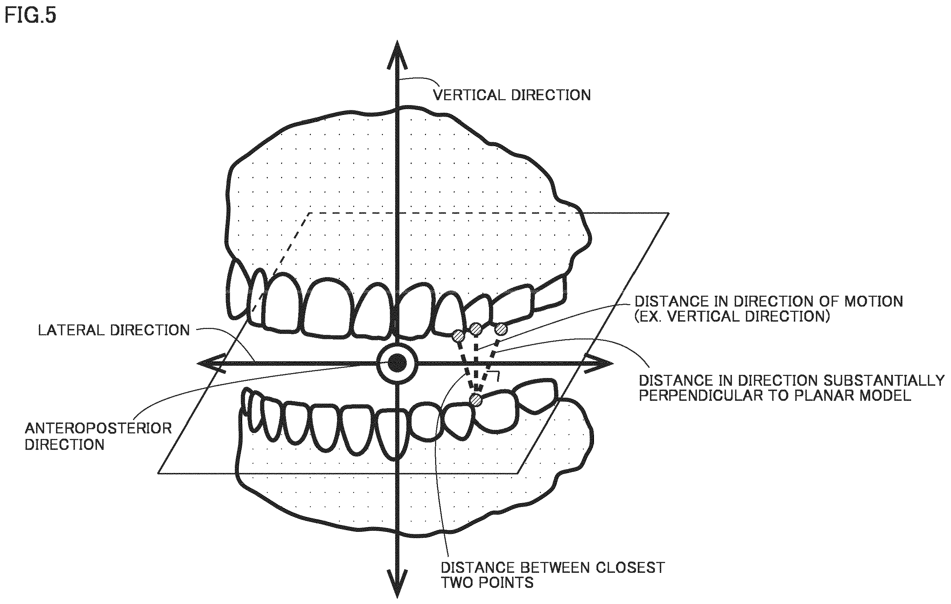

The jaw motion data is measured by a jaw motion measuring device (not shown) and indicates the positions of the upper and lower jaws during a jaw motion. For example, the jaw motion data includes: time-series position information about the upper and lower jaws that is obtained when the jaws move from an occlusal state to an open state; or time-series position information about the upper and lower jaws that is obtained when the jaws move from the open state to the occlusal state. Specifically, as shown in Fig. 5 (described later), the jaw motion data includes time-series position information about the upper and lower jaws that is obtained when the upper and lower jaws are closed or opened in the vertical direction. The jaw motion data includes time-series position information about the upper and lower jaws that is obtained when the upper and lower jaws move in mutually different directions along the lateral direction on the subject's face. The jaw motion data includes time-series position information about the upper and lower jaws that is obtained when the upper and lower jaws move in mutually different directions along the anteroposterior direction on the subject's face. The user attaches a jaw motion measuring device (not shown) to the subject's face and instructs the subject to move his/her upper and lower jaws in various directions, and thereby can acquire jaw motion data showing the jaw motion of the subject.

Note that the jaw motion data may be obtained by simulating the jaw motion by the user based on the upper-jaw tooth row data and the lower-jaw tooth row data. Specifically, as shown in Fig. 5 (described later), the user changes, in the vertical direction, the position information in the three-dimensional data of the upper and lower jaws by simulations based on the user's input, and thereby can generate jaw motion data of the state in which the upper and lower jaws close or open in the vertical direction. The user changes, in the lateral direction on the face, the position information in the three-dimensional data of the upper and lower jaws by simulations based on the user's input, and thereby can generate jaw motion data of the state in which the upper and lower jaws move in mutually different directions along the lateral direction on the face. The user changes, in the anteroposterior direction on the face, the position information in the three-dimensional data of the upper and lower jaws by simulations based on the user's input, and thereby can generate jaw motion data of the state in which the upper and lower jaws move in mutually different directions along the anteroposterior direction on the face.

When data generating apparatus 1 acquires the upper-jaw tooth row data, the lower-jaw tooth row data, and the jaw motion data, it generates video data based on the upper-jaw tooth row data, the lower-jaw tooth row data, and the jaw motion data that have been acquired. This video data is used for reproducing a video indicating respective positions of the row of teeth in the upper jaw and the row of teeth in the lower jaw, and these respective positions change in accordance with the jaw motion.

The video reproduced based on the video data is composed of a plurality of frames (still images) that are sequential in a time-series manner. Each frame shows a rendering image (an outer appearance image) showing a three-dimensional shape of each of the row of teeth in the upper jaw and the row of teeth in the lower jaw. The rendering image is generated by processing or editing certain data. For example, data generating apparatus 1 processes or edits the three-dimensional data of the upper and lower rows of teeth that has been acquired by the three-dimensional scanner, and thereby can generate a rendering image showing two-dimensional upper and lower rows of teeth as seen from a prescribed viewpoint. Further, data generating apparatus 1 changes the prescribed viewpoint in multiple directions, and thereby can generate a plurality of rendering images showing two-dimensional upper and lower rows of teeth viewed in multiple directions. Alternatively, data generating apparatus 1 processes or edits the volume data of the upper and lower jaws that has been acquired by the CT imaging apparatus, and thereby can generate a rendering image showing two-dimensional upper and lower jaws (portions of the upper and lower jaws that can be represented by CT data) as seen from a prescribed viewpoint. Further, data generating apparatus 1 changes the prescribed viewpoint in multiple directions, and thereby can generate a plurality of rendering images showing two-dimensional upper and lower jaws (portions of the upper and lower jaws that can be represented by CT data) viewed in multiple directions.

Further, as will be described later in detail, when data generating apparatus 1 generates video data, it adds an indicator to the video of the jaw motion. This indicator indicates the positional relation between the row of teeth in the upper jaw and the row of teeth in the lower jaw, and this positional relation changes in accordance with the jaw motion. Further, data generating apparatus 1 adds a different indicator according to the positional relation between the rows of teeth in the upper and lower jaws that changes in accordance with the jaw motion.

For example, as shown in Fig. 1, data generating apparatus 1 generates video data of the upper and lower rows of teeth during a jaw motion in a time-series manner (t1, t2, and t3 in the present example). In the example in Fig. 1, data generating apparatus 1 combines a rendering image generated using the three-dimensional data of the upper and lower rows of teeth that has been acquired by the three-dimensional scanner and a rendering image generated using the volume data of the upper and lower jaws that has been acquired by the CT imaging apparatus, to thereby generate each frame of video data of the upper and lower rows of teeth during the jaw motion. Data generating apparatus 1 may generate each frame of the video data of the upper and lower rows of teeth during the jaw motion with the use only of the rendering image generated using the three-dimensional data of the upper and lower rows of teeth that has been acquired by the three-dimensional scanner. Alternatively, data generating apparatus 1 may generate each frame of the video data of the upper and lower rows of teeth during the jaw motion with the use only of the rendering image generated using the volume data of the upper and lower jaws that has been acquired by the CT imaging apparatus. Further, in each frame of the video to be reproduced based on the video data, data generating apparatus 1 adds, as an indicator, a different color according to the positional relation between the row of teeth in the upper jaw and the row of teeth in the lower jaw. For example, according to the distance between each point in the point cloud constituting the row of teeth in the upper jaw and each point in the point cloud constituting the row of teeth in the lower jaw, data generating apparatus 1 adds a different color as an indicator to each point in the point cloud constituting the row of teeth in the upper jaw and each point in the point cloud constituting the row of teeth in the lower jaw.

In this way, according to the positional relation between the rows of teeth in the upper and lower jaws that changes in accordance with the jaw motion, data generating apparatus 1 adds a different color to each point in the point cloud constituting the row of teeth in the upper jaw and each point in the point cloud constituting the row of teeth in the lower jaw in each frame of the video. Thereby, data generating apparatus 1 can show the user, in a heat map format with colors, the state in which the distance between each point in the point cloud constituting the row of teeth in the upper jaw and each point in the point cloud constituting the row of teeth in the lower jaw changes while the jaw motion occurs in a time-series manner. In this case, data generating apparatus 1 may show the user the state in which the rendering image of the upper and lower rows of teeth is not moved but kept still while only the heat map with colors is changed.

Thereby, the user can easily check the positional relation between the rows of teeth in the upper and lower jaws not only when the upper and lower rows of teeth are in an occlusal state or in an open state, but even during a jaw motion such as while jaws move from the occlusal state to the open state or move from the open state to the occlusal state. Accordingly, the user such as an operator can appropriately check the position of contact between the upper and lower rows of teeth in the movement of the jaw motion while considering the positional relation between the rows of teeth in the upper and lower jaws, so that the user can accurately prepare a treatment plan for an orthodontic treatment, a prosthesis treatment, and the like.

### [Hardware Configuration of Data Generating Apparatus 1]

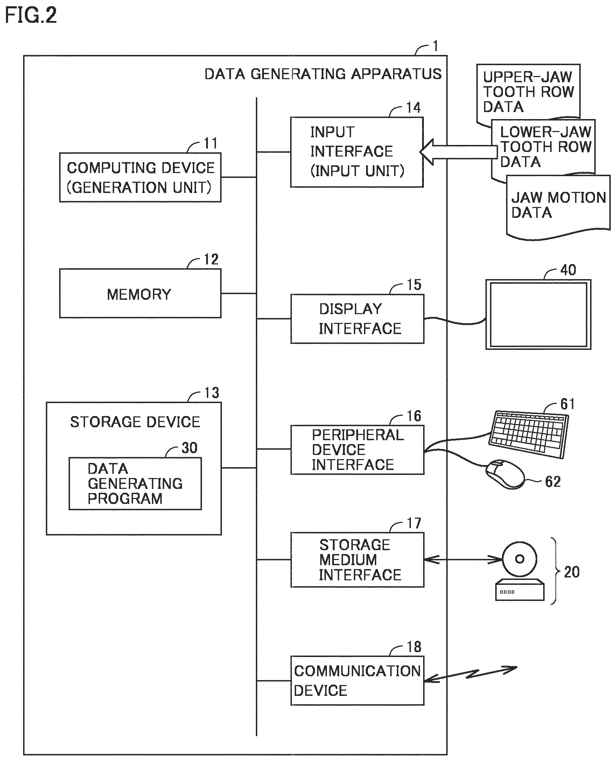

A hardware configuration of data generating apparatus 1 according to the first embodiment will be hereinafter described with reference to Fig. 2. Fig. 2 is a block diagram showing a hardware configuration of data generating apparatus 1 according to the first embodiment. Data generating apparatus 1 may be implemented, for example, by a general-purpose computer or a special-purpose computer.

As shown in Fig. 2, data generating apparatus 1 includes, as main hardware elements, a computing device 11, a memory 12, a storage device 13, an input interface 14, a display interface 15, a peripheral device interface 16, a storage medium interface 17, and a communication device 18.

Computing device 11 is a computing entity (a computer) that executes various programs to execute various processing and is an example of a "generation unit". Computing device 11 includes, for example, a processor such as a central processing unit (CPU) or a micro-processing unit (MPU). While the processor, which is an example of computing device 11, has functions of executing various processing by executing a program, some or all of these functions may be implemented by dedicated hardware circuitry such as an application specific integrated circuit (ASIC) or a field-programmable gate array (FPGA). The "processor" is not limited to a processor in a narrow sense that executes processing in a stored program scheme like the CPU or the MPU, but may include hard-wired circuitry such as the ASIC or the FPGA. Thus, the "processor", which is an example of computing device 11, can also be read as processing circuitry, for which processing is defined in advance by a computer-readable code and/or hard-wired circuitry. Computing device 11 may be constituted of one chip or a plurality of chips. Further, the processor and relating processing circuitry may be constituted of a plurality of computers interconnected through wires or wirelessly over a local area network, a wireless network or the like. The processor and the relating processing circuitry may be implemented by a cloud computer that performs remote computation based on input data and outputs a result of the computation to another device located at a remote position.

Memory 12 includes a volatile storage area (for example, a working area) where a program code, a work memory or the like is temporarily stored when computing device 11 executes various programs. Examples of memory 12 include a volatile memory such as a dynamic random access memory (DRAM) and a static random access memory (SRAM), or a nonvolatile memory such as a read only memory (ROM) and a flash memory.

Storage device 13 stores various programs executed by computing device 11, various pieces of data, and the like. Storage device 13 may be one or more non-transitory computer-readable media, or may be one or more computer-readable storage media. Examples of storage device 13 include a hard disk drive (HDD), a solid state drive (SSD), and the like.

Storage device 13 stores a data generating program 30. Data generating program 30 describes a content of the data generation processing for computing device 11 to generate video data of the upper and lower rows of teeth during a jaw motion.

Input interface 14 is an example of an "input unit". Input interface 14 acquires upper-jaw tooth row data, lower-jaw tooth row data, and jaw motion data. As described above, in data generating apparatus 1, the three-dimensional data acquired by the user through the three-dimensional scanner and including the position information about each point in the point cloud constituting the surface of each of the upper and lower rows of teeth of the subject is input through input interface 14 as upper-jaw tooth row data and lower-jaw tooth row data. Further, in data generating apparatus 1, the three-dimensional volume (voxel) data of the upper and lower jaws of the subject that has been acquired by the user through the CT imaging apparatus may be input through input interface 14 as upper-jaw tooth row data and lower-jaw tooth row data. Further, in data generating apparatus 1, the data acquired by the user through the jaw motion measuring device and indicating the positions of the upper and lower jaws during the jaw motion of the subject is input through input interface 14 as jaw motion data. In data generating apparatus 1, the data generated by the user through simulations and indicating the positions of the upper and lower jaws during the jaw motion of the subject may be input through input interface 14 as jaw motion data.

Input interface 14 may acquire, as upper-jaw tooth row data, at least one of the three-dimensional data of the row of teeth in the upper jaw acquired by the three-dimensional scanner and the three-dimensional volume (voxel) data of the upper jaw acquired by the CT imaging apparatus. Further, input interface 14 may acquire, as lower-jaw tooth row data, at least one of the three-dimensional data of the row of teeth in the lower jaw acquired by the three-dimensional scanner and the three-dimensional volume (voxel) data of the lower jaw acquired by the CT imaging apparatus.

Display interface 15 is an interface through which a display 40 is connected. Display interface 15 implements input and output of data between data generating apparatus 1 and display 40. For example, data generating apparatus 1 causes display 40 to show the video based on the generated video data via display interface 15.

Peripheral device interface 16 is an interface through which peripheral devices such as a keyboard 61 and a mouse 62 are connected. Peripheral device interface 16 implements input and output of data between data generating apparatus 1 and the peripheral devices. For example, with the use of the peripheral devices such as keyboard 61 and mouse 62, the user can input a desired command through peripheral device interface 16, and can cause data generating apparatus 1 to generate and edit video data based on this command.

Storage medium interface 17 reads various data stored in a storage medium 20 such as a removable disk, and writes various data into storage medium 20. For example, data generating apparatus 1 may acquire data generating program 30 from storage medium 20 via storage medium interface 17, or may write video data into storage medium 20 via storage medium interface 17. Storage medium 20 may be one or more non-transitory computer readable media, or may be one or more computer-readable storage media. When data generating apparatus 1 acquires the upper-jaw tooth row data, the lower-jaw tooth row data, and the jaw motion data from storage medium 20 via storage medium interface 17, storage medium interface 17 may be an example of an "input unit".

Communication device 18 transmits and receives data to and from an external device through wired communication or wireless communication. For example, data generating apparatus 1 may receive data generating program 30 from an external device via communication device 18, or may transmit video data to the external device via communication device 18. When data generating apparatus 1 acquires the upper-jaw tooth row data, the lower-jaw tooth row data, and the jaw motion data from the external device via communication device 18, communication device 18 may be an example of an "input unit".

### [Example of Video Data]

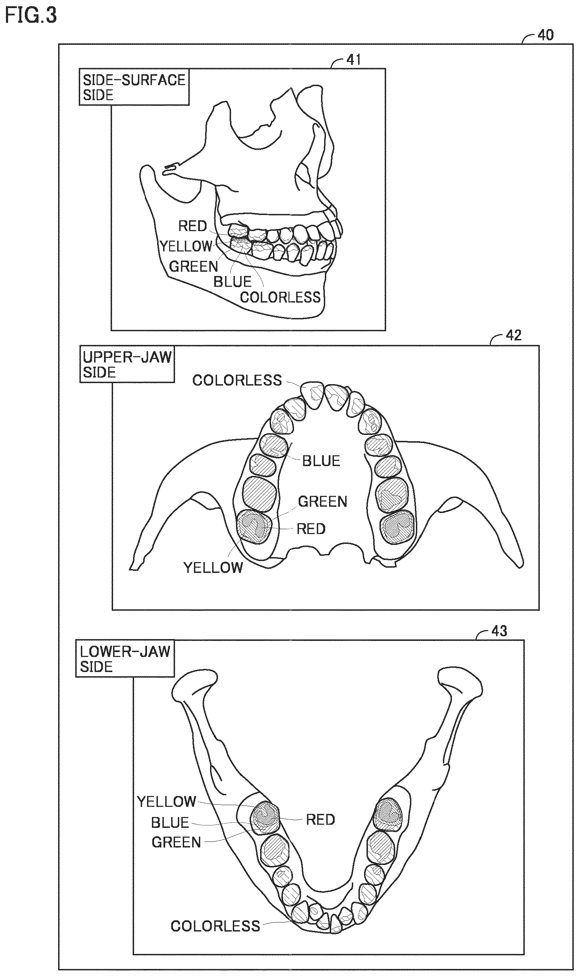

An example of video data generated by data generating apparatus 1 according to the first embodiment will be hereinafter described with reference to Figs. 3 to 9. Fig. 3 is a diagram for illustrating an example of a frame of video data generated by data generating apparatus 1 according to the first embodiment.

As shown in Fig. 3, with the use of the video data generated by data generating apparatus 1, the user can check the video of the upper and lower rows of teeth as seen from various viewpoints. In the example in Fig. 3, data generating apparatus 1 causes display 40 to show: one frame of a video showing the upper and lower rows of teeth viewed from the side-surface side (a frame 41 on the side-surface side); one frame of a video showing the rows of teeth in the upper jaw viewed from the occlusal-surface side of the lower jaw (a frame 42 on the upper-jaw side); and one frame of a video showing the row of teeth in the lower jaw viewed from the occlusal-surface side of the upper jaw (a frame 43 on the lower-jaw side). Note that frame 41 on the side-surface side, frame 42 on the upper-jaw side, and frame 43 on the lower-jaw side shown in Fig. 3 are images each obtained by combining: a rendering image generated using the three-dimensional data of the upper and lower rows of teeth that has been acquired by the three-dimensional scanner; and a rendering image generated using the volume data of the upper and lower jaws that has been acquired by the CT imaging apparatus.

Frame 41 on the side-surface side, frame 42 on the upper-jaw side, and frame 43 on the lower-jaw side shown in Fig. 3 are frames of videos showing the same upper and lower rows of teeth as seen from various viewpoints at the same timing, and show the state in which the row of teeth in the upper jaw and the row of teeth in the lower jaw are partly separated from each other (an open state). Further, in each of frame 41 on the side-surface side, frame 42 on the upper-jaw side, and frame 43 on the lower-jaw side, different colors are added according to the positional relation between the row of teeth in the upper jaw and the row of teeth in the lower jaw. In addition, data generating apparatus 1 may show the user frame 41 in the state in which the rendering image and the heat map are changed according to the video of the jaw motion, but may show the user each of frames 42 and 43 in the state in which the rendering image is not moved but kept still while only the heat map is changed.

As described above, based on the upper-jaw tooth row data and the lower-jaw tooth row data acquired via input interface 14, data generating apparatus 1 can recognize the position information (X, Y, Z) about each point in the point cloud constituting the surface of each of the upper and lower rows of teeth of the subject. Thus, based on the position information about each point in the point cloud constituting the surface of each of the upper and lower rows of teeth, data generating apparatus 1 calculates the distance between a prescribed point constituting the row of teeth in the upper jaw and a prescribed point constituting the row of teeth in the lower jaw, and, according to the calculated distance, adds a color to each of the prescribed point constituting the row of teeth in the upper jaw and the prescribed point constituting the row of teeth in the lower jaw.

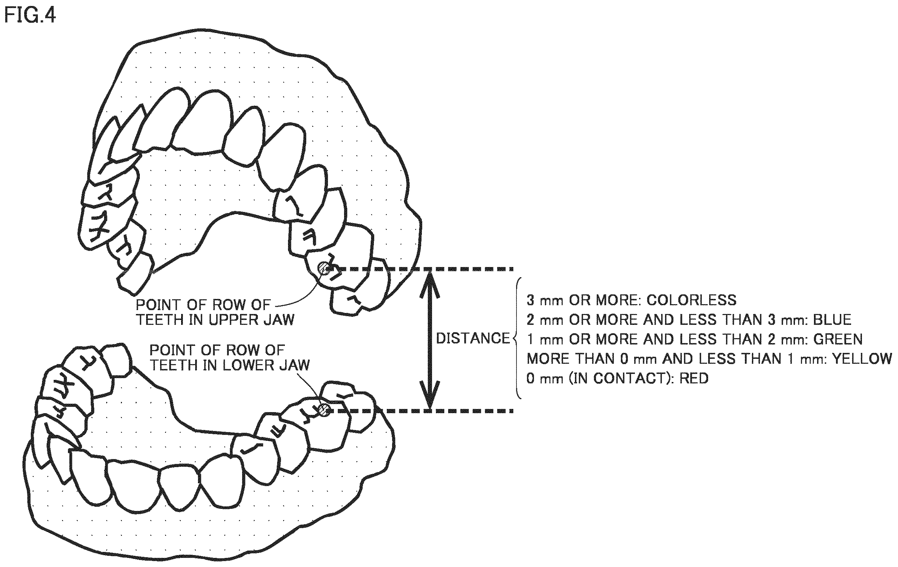

Fig. 4 is a diagram for illustrating addition of colors according to the distance between the prescribed point constituting the row of teeth in the upper jaw and the prescribed point constituting the row of teeth in the lower jaw. As shown in Fig. 4, when the distance between the prescribed point constituting the row of teeth in the upper jaw and the prescribed point constituting the row of teeth in the lower jaw is 0 mm, i.e., when the prescribed point constituting the row of teeth in the upper jaw is in contact with the prescribed point constituting the row of teeth in the lower jaw, data generating apparatus 1 adds red to the prescribed points in the upper and lower rows of teeth between which the above-mentioned distance has been calculated. When the distance between the prescribed point constituting the row of teeth in the upper jaw and the prescribed point constituting the row of teeth in the lower jaw is greater than 0 mm and less than 1 mm, data generating apparatus 1 adds yellow to the prescribed points in the upper and lower rows of teeth between which the above-mentioned distance has been calculated. When the distance between the prescribed point constituting the row of teeth in the upper jaw and the prescribed point constituting the row of teeth in the lower jaw is 1 mm or more and less than 2 mm, data generating apparatus 1 adds green to the prescribed points in the upper and lower rows of teeth between which the above-mentioned distance has been calculated. When the distance between the prescribed point constituting the row of teeth in the upper jaw and the prescribed point constituting the row of teeth in the lower jaw is 2 mm or more and less than 3 mm, data generating apparatus 1 adds blue to the prescribed points in the upper and lower rows of teeth between which the above-mentioned distance has been calculated. When the distance between the prescribed point constituting the row of teeth in the upper jaw and the prescribed point constituting the row of teeth in the lower jaw is 3 mm or more, data generating apparatus 1 adds no color to the prescribed points in the upper and lower rows of teeth between which the above-mentioned distance has been calculated.

The relation between the two-point distance from the row of teeth in the upper jaw to the row of teeth in the lower jaw and each color to be added can be set as appropriate by the user. For example, using keyboard 61 and mouse 62, the user can set a color for the two-point distance between the row of teeth in the upper jaw and the row of teeth in the lower jaw. Based on the setting by the user, data generating apparatus 1 adds different colors to each frame of the video according to the two-point distance between the row of teeth in the upper jaw and the row of teeth in the lower jaw.

Fig. 5 is a diagram for illustrating calculation of the distance between the prescribed point constituting the row of teeth in the upper jaw and the prescribed point constituting the row of teeth in the lower jaw. As shown in Fig. 5, when calculating the two-point distance between the row of teeth in the upper jaw and the row of teeth in the lower jaw, data generating apparatus 1 can select one of: the two-point distance along the direction of movement of the jaw motion; and the distance between the closest two points.

For example, as a distance between the row of teeth in the upper jaw and the row of teeth in the lower jaw, data generating apparatus 1 calculates a distance between a prescribed point constituting the row of teeth in the upper jaw and a point constituting the row of teeth in the lower jaw existing in the direction corresponding to the direction of the jaw motion starting from the prescribed point. In other words, from the point cloud constituting the row of teeth in the lower jaw, data generating apparatus 1 selects a point existing in the direction corresponding to the direction of the jaw motion starting from a prescribed point constituting the row of teeth in the upper jaw, and then calculates a distance between the selected point of the row of teeth in the lower jaw and the prescribed point of the row of teeth in the upper jaw.

Specifically, data generating apparatus 1 can recognize the direction of the jaw motion based on the jaw motion data acquired via input interface 14. When the upper and lower jaws move in the vertical direction (the direction of the jaw motion from an occlusal state to an open state, and the direction of the jaw motion from an open state to an occlusal state), data generating apparatus 1 can recognize, based on the jaw motion data, the time-series positions of the upper and lower jaws while these upper and lower jaws move in the vertical direction. Based on the positions of the upper and lower jaws recognized in a time-series manner, data generating apparatus 1 calculates the distance in the direction of the jaw motion between the prescribed point constituting the row of teeth in the upper jaw and the prescribed point constituting the row of teeth in the lower jaw.

Further, as a distance between the row of teeth in the upper jaw and the row of teeth in the lower jaw, data generating apparatus 1 calculates the distance between the prescribed point constituting the row of teeth in the upper jaw and the point closest to this prescribed point in the point cloud constituting the row of teeth in the lower jaw. In other words, from the point cloud constituting the row of teeth in the lower jaw, data generating apparatus 1 selects a point closest to the prescribed point constituting the row of teeth in the upper jaw, and then calculates a distance between the selected point of the row of teeth in the lower jaw and this prescribed point of the row of teeth in the upper jaw.

In this way, as the two-point distance between the row of teeth in the upper jaw and the row of teeth in the lower jaw, data generating apparatus 1 may calculate one of the two-point distance corresponding to the direction of movement and the distance between the closest two points.

Note that the reference of the above-mentioned two-point distance between the row of teeth in the upper jaw and the row of teeth in the lower jaw can be set as appropriate by the user. For example, using keyboard 61 and mouse 62, the user can select one of the two-point distance corresponding to the direction of movement and the distance between the closest two points. Data generating apparatus 1 calculates the two-point distance between the row of teeth in the upper jaw and the row of teeth in the lower jaw based on the user's selection, and adds different colors to each frame of the video according to the calculated distance.

Further, data generating apparatus 1 may calculate the distance between the prescribed point constituting the row of teeth in the upper jaw and the point constituting the row of teeth in the lower jaw existing in the direction perpendicular to the plane of a prescribed planar model to thereby calculate the two-point distance between the row of teeth in the upper jaw and the row of teeth in the lower jaw. For example, the planar model includes: a camper's plane, a Frankfurt plane, and an occlusal plane. Specifically, in a front view of the subject's face, the camper's plane extends along an imaginary horizontal line connecting nose holes and ear holes, the Frankfurt plane extends along an imaginary horizontal line connecting eyes and ear holes (i.e., in the state in which a jaw is lowered), and the occlusal plane extends along an imaginary line connecting three points of: an incisor point (the midpoint between the mesial angles of the left and right central incisors in a lower jaw); and vertices of distal buccal cusps of the left and right second molars in a lower jaw. Further, data generating apparatus 1 may use a planar model selected by the user from among the above-mentioned planar models to calculate a distance between: a prescribed point constituting the row of teeth in the upper jaw; and a point constituting the row of teeth in the lower jaw that passes through the prescribed point and exists in the direction substantially perpendicular to the plane of the planar model or a point constituting the row of teeth in the lower jaw that is closest to a straight line in this direction.

Referring back to Fig. 3, in each of frame 41 on the side-surface side, frame 42 on the upper-jaw side, and frame 43 on the lower-jaw side that are colored by data generating apparatus 1, the upper and lower rows of teeth are displayed in a heat map format such that the colors are different according to the distance between the row of teeth in the upper jaw and the row of teeth in the lower jaw. For example, red or yellow is added to a point at which the distance between the rows of teeth in the upper and lower jaws is relatively short, and green or blue is added to a point at which the distance between the rows of teeth in the upper and lower jaws is relatively long. In other words, data generating apparatus 1 causes display 40 to show each frame such that the tone of the first color (for example, a cool color) becomes darker as the distance between the rows of teeth in the upper and lower jaws becomes longer, and such that the tone of the second color (for example, a warm color) becomes darker as the distance between the rows of teeth in the upper and lower jaws become shorter. Thereby, the operator who sees the frame shown on display 40 can recognize the distance between the row of teeth in the upper jaw and the row of teeth in the lower jaw. Thereby, using the heat map, the user can easily check the positional relation between the row of teeth in the upper jaw and the row of teeth in the lower jaw during the jaw motion, i.e., the portion in which the row of teeth in the upper jaw and the row of teeth in the lower jaw are close to each other, and the portion in which the row of teeth in the upper jaw and the row of teeth in the lower jaw are distant from each other.

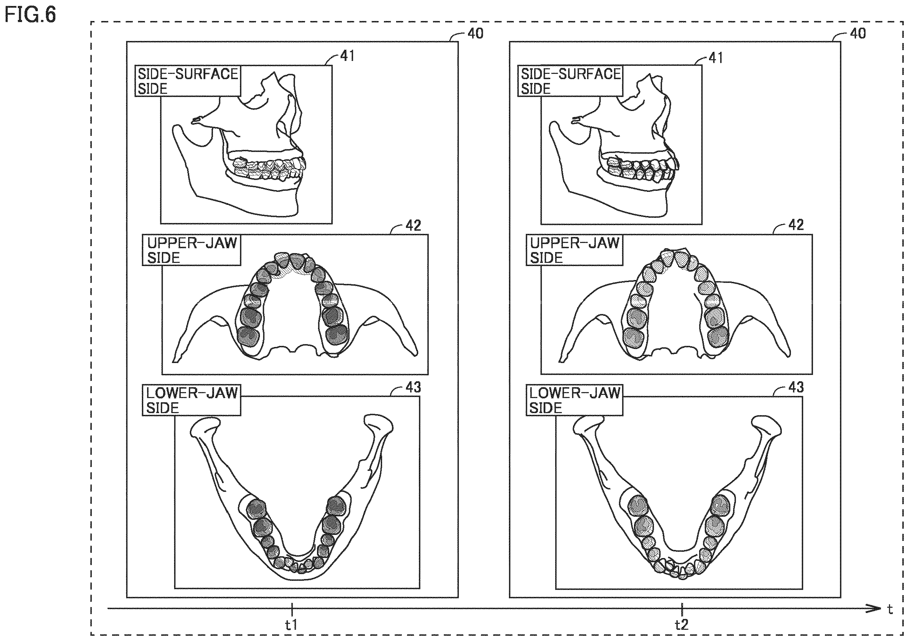

Figs. 6 to 8 each are a diagram for illustrating an example of each frame of the video data generated by data generating apparatus 1 according to the first embodiment. Note that frame 41 on the side-surface side, frame 42 on the upper-jaw side, and frame 43 on the lower-jaw side shown in Figs. 6 to 8 are images each obtained by combining a rendering image generated using the three-dimensional data of the upper and lower rows of teeth that has been acquired by the three-dimensional scanner and a rendering image generated using the volume data of the upper and lower jaws that has been acquired by the CT imaging apparatus. Figs. 6 to 8 show the frames of the video of the jaw motion in a time-series manner (t1 to t6) from the state in which the row of teeth in the upper jaw and the row of teeth in the lower jaw are in contact with each other (an occlusal state), which turns into the state in which the row of teeth in the upper jaw and the row of teeth in the lower jaw are partly separated from each other (an open state), which then turns into the state in which the row of teeth in the upper jaw and the row of teeth in the lower jaw again come into contact with each other (an occlusive state). At this time, data generating apparatus 1 shows frame 41 in the state in which the rendering image and the heat map are changed according to the video of the jaw motion, but shows frames 42 and 43 in the state in which the rendering image is not moved but kept still while only the heat map is changed.

For example, as shown in Fig. 6, at t1 (for example, 0 msec), display 40 shows frame 41 on the side-surface side, frame 42 on the upper-jaw side, and frame 43 on the lower-jaw side in the state in which the row of teeth in the upper jaw and the row of teeth in the lower jaw are in contact with each other (an occlusal state). At t2 (for example, 0 msec to 30 msec), display 40 shows frame 41 on the side-surface side, frame 42 on the upper-jaw side, and frame 43 on the lower-jaw side in the state in which the row of teeth in the upper jaw and the row of teeth in the lower jaw are partly slightly separated from each other.

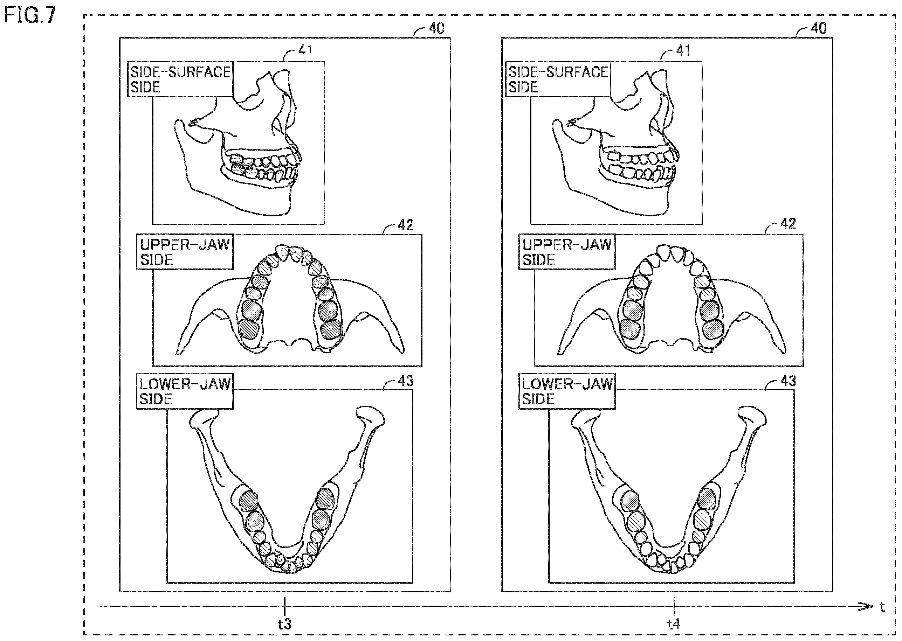

As shown in Fig. 7, at t3 (for example, 30 msec to 60 msec) and t4 (for example, 60 msec to 90 msec), display 40 shows frame 41 on the side-surface side, frame 42 on the upper-jaw side, and frame 43 on the lower-jaw side in the state in which the row of teeth in the upper jaw and the row of teeth in the lower jaw are partly further separated from each other (an open state).

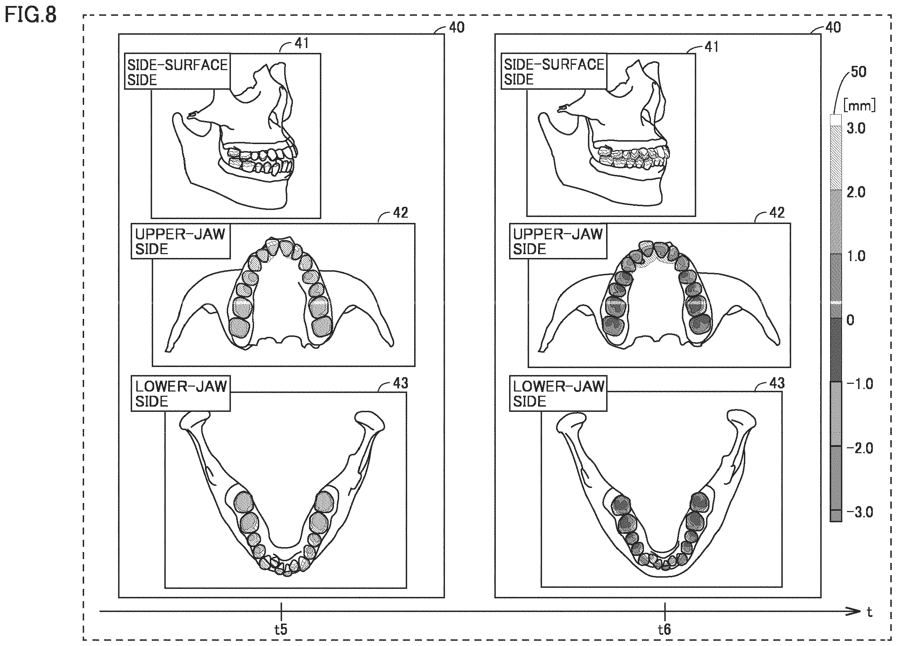

As shown in Fig. 8, at t5 (for example, 90 msec to 120 msec), display 40 shows frame 41 on the side-surface side, frame 42 on the upper-jaw side, and frame 43 on the lower-jaw side in the state in which the row of teeth in the upper jaw and the row of teeth in the lower jaw are partly slightly separated from each other. At t6 (for example, 120 msec to 150 msec), display 40 shows frame 41 on the side-surface side, frame 42 on the upper-jaw side, and frame 43 on the lower-jaw side in the state in which the row of teeth in the upper jaw and the row of teeth in the lower jaw are in contact with each other (an occlusal state). At each of time t1 to time t6, data generating apparatus 1 causes the same screen to show an elapsed period of time from t1, a numerical value of an expected distance between the rows of teeth in the upper and lower jaws, an indicator 50, and the like. The operator who sees display 40 showing such a screen can obtain appropriate senses of time and distance.

Further, as shown in Figs. 6 to 8, in each of the frames from t1 to t6, the upper and lower rows of teeth are displayed in a heat map format such that the colors are different according to the distance between the row of teeth in the upper jaw and the row of teeth in the lower jaw, for example, such that red or yellow is added to the point at which the distance between the rows of teeth in the upper and lower jaws is relatively short, and green or blue is added to the point at which the distance between the rows of teeth in the upper and lower jaws is relatively long.

For example, at t1 in Fig. 6 and at t6 in Fig. 8, the row of teeth in the upper jaw and the row of teeth in the lower jaw are in contact with each other (an occlusal state), and thus, the number of portions colored in red or yellow is relatively large in the row of teeth shown in each of frame 41 on the side-surface side, frame 42 on the upper-jaw side, and frame 43 on the lower-jaw side. On the other hand, at t3 and t4 in Fig. 7, the row of teeth in the upper jaw and the row of teeth in the lower jaw are partly separated from each other (an open state), and thus, the number of portions colored in green or blue is relatively large in the row of teeth shown in each of frame 41 on the side-surface side, frame 42 on the upper-jaw side, and frame 43 on the lower-jaw side.

In this way, according to the positional relation between the rows of teeth in the upper and lower jaws that changes in accordance with the jaw motion, data generating apparatus 1 adds different colors to the row of teeth in the upper jaw and the row of teeth in the lower jaw in each frame of the video, which makes it possible for the user to see the state, in a heat map format with colors, in which the distance between the rows of teeth in the upper and lower jaws changes during the jaw motion performed in a time-series manner. Thereby, the user can easily check the positional relation between the row of teeth in the upper jaw and the row of teeth in the lower jaw during the jaw motion.

During reproduction of a video with the use of video data, data generating apparatus 1 may calculate the distance between the rows of teeth in the upper and lower jaws in a time-series manner, and add a color corresponding to the calculated distance to each frame when each frame is displayed in this time-series manner. Alternatively, data generating apparatus 1 may add a color corresponding to the distance between the rows of teeth in the upper and lower jaws to each frame to generate colored video data in advance, and reproduce a video with the use of the video data generated in advance. Further, each of the frames illustrated in Figs. 6 to 8 may show not only the motion of opening a mouth shown in the figures but also any jaw motion such as a motion to the lateral left side, a motion to the lateral right side, a motion to the forward side, or a chewing motion.

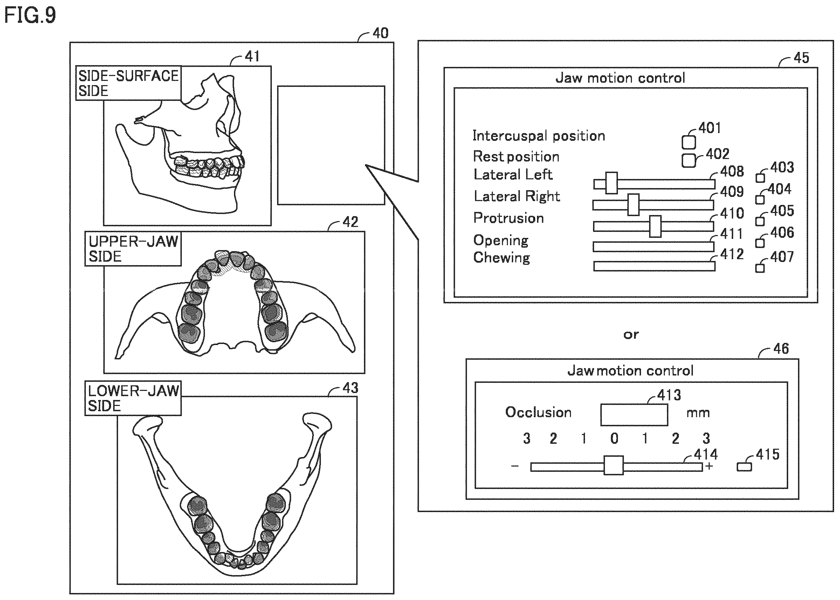

Fig. 9 is a diagram for illustrating an example of a setting related to a video reproduced by data generating apparatus 1 according to the first embodiment. Note that frame 41 on the side-surface side, frame 42 on the upper-jaw side, and frame 43 on the lower-jaw side shown in Fig. 9 are images each obtained by combining: a rendering image generated using the three-dimensional data of the upper and lower rows of teeth that has been acquired by the three-dimensional scanner; and a rendering image generated using the volume data of the upper and lower jaws that has been acquired by the CT imaging apparatus. As shown in Fig. 9, data generating apparatus 1 may display, in each frame of the video data, a setting column 45 through which the user simulates a jaw motion.

For example, setting column 45 includes icons 401 to 407 and seek bars 408 to 412 that can be operated by the user through keyboard 61 or mouse 62.

Icon 401 is used for positioning the upper and lower rows of teeth at the intercuspal position. When the user clicks on icon 401, the lower jaw moves in frame 41 on the side-surface side, frame 42 on the upper-jaw side, and frame 43 on the lower-jaw side that are shown on display 40, such that the upper and lower rows of teeth are positioned at the intercuspal position. Note that the intercuspal position is a jaw position at which the upper and lower rows of teeth are in contact with each other at the largest number of parts and thus are in a stable state.

Icon 402 is used for positioning the upper and lower rows of teeth at the natural occlusal position. When the user clicks on icon 402, the lower jaw moves in frame 41 on the side-surface side, frame 42 on the upper-jaw side, and frame 43 on the lower-jaw side that are shown on display 40, such that the upper and lower rows of teeth are positioned at the natural occlusal position. Note that the natural occlusal position is a jaw position at which the upper and lower rows of teeth are naturally in contact with each other.

Icon 403 is used for reproducing a video showing that the upper and lower rows of teeth perform a motion to the lateral left side. When the user clicks on icon 403, a video showing that the upper and lower rows of teeth perform a motion to the lateral left side is reproduced in frame 41 on the side-surface side, frame 42 on the upper-jaw side, and frame 43 on the lower-jaw side that are shown on display 40. Seek bar 408 is used for the user to display a frame at a desired timing in a video showing that the upper and lower rows of teeth perform a motion to the lateral left side. The motion to the lateral left side means a motion in which a lower jaw moves to the lateral left side.

Icon 404 is used for reproducing a video showing that the upper and lower rows of teeth perform a motion to the lateral right side. When the user clicks on icon 404, a video showing that the upper and lower rows of teeth perform a motion to the lateral right side is reproduced in frame 41 on the side-surface side, frame 42 on the upper-jaw side, and frame 43 on the lower-jaw side that are shown on display 40. Seek bar 409 is used for the user to display a frame at a desired timing in a video showing that the upper and lower rows of teeth perform a motion to the lateral right side. The motion to the lateral right side means a motion in which a lower jaw moves to the lateral right side.

Icon 405 is used for reproducing a video showing that the upper and lower rows of teeth perform a motion to the forward side. When the user clicks on icon 405, a video showing that the upper and lower rows of teeth perform a motion to the forward side is reproduced in frame 41 on the side-surface side, frame 42 on the upper-jaw side, and frame 43 on the lower-jaw side that are shown on display 40. Seek bar 410 is used for the user to display a frame at a desired timing in a video showing that the upper and lower rows of teeth perform a motion to the forward side. The motion to the forward side is a motion in which a lower jaw moves to the forward side.

Icon 406 is used for reproducing a video showing that the upper and lower rows of teeth perform a motion of opening a mouth. When the user clicks on icon 406, a video showing that the upper and lower rows of teeth perform a motion of opening a mouth is reproduced in frame 41 on the side-surface side, frame 42 on the upper-jaw side, and frame 43 on the lower-jaw side that are shown on display 40. Seek bar 411 is used for the user to display a frame at a desired timing in a video showing that the upper and lower rows of teeth perform a motion of opening a mouth. The motion of opening a mouth is a motion in which a lower jaw moves such that the upper and lower rows of teeth are opened.

Icon 407 is used for reproducing a video showing that the upper and lower rows of teeth perform a chewing motion. When the user clicks on icon 407, a video showing that the upper and lower rows of teeth perform a chewing motion is reproduced in frame 41 on the side-surface side, frame 42 on the upper-jaw side, and frame 43 on the lower-jaw side that are shown on display 40. Seek bar 412 is used for the user to display a frame at a desired timing in a video showing that the upper and lower rows of teeth perform a chewing motion. The chewing motion is a motion in which a lower jaw moves such that the upper and lower rows of teeth perform chewing.

In this way, based on the command input through setting column 45, data generating apparatus 1 can cause the upper and lower rows of teeth to move to various positions or cause the upper and lower rows of teeth to perform a motion in various directions in frame 41 on the side-surface side, frame 42 on the upper-jaw side, and frame 43 on the lower-jaw side that are shown on display 40. Thereby, the user can freely simulate a jaw motion.

Further, in each frame of the video data, data generating apparatus 1 may display a setting column 46 through which the user simulates a jaw motion with reference to a viewpoint set in advance.

Setting column 46 includes: an input column 413 into which the user can input data through keyboard 61 or mouse 62; and a seek bar 414 and an icon 415 that can be operated by the user through keyboard 61 or mouse 62.

Input column 413 is a column into which the user directly inputs an amount of movement of the upper and lower rows of teeth by which the positions of the upper and lower rows of teeth are moved with reference to a viewpoint set in advance.

Seek bar 414 is used for the user to set an amount of movement of the upper and lower rows of teeth by which the positions of the upper and lower rows of teeth are moved with reference to a viewpoint set in advance.

For example, when the occlusal plane is set in advance as a reference, the upper and lower rows of teeth are moved in the direction perpendicular to the occlusal plane based on the amount of movement directly input by the user into input column 413 or based on the amount of movement set by the user through seek bar 414.

Icon 415 is used for resetting the amount of movement that has been input to input column 413 and the amount of movement that has been set through seek bar 414.

In this way, based on the amount of movement input to input column 413 and the amount of movement set through seek bar 414, data generating apparatus 1 can move the upper and lower rows of teeth to various positions in frame 41 on the side-surface side, frame 42 on the upper-jaw side, and frame 43 on the lower-jaw side that are shown on display 40. Thereby, the user can freely simulate a jaw motion.

### [Data Generation Processing]

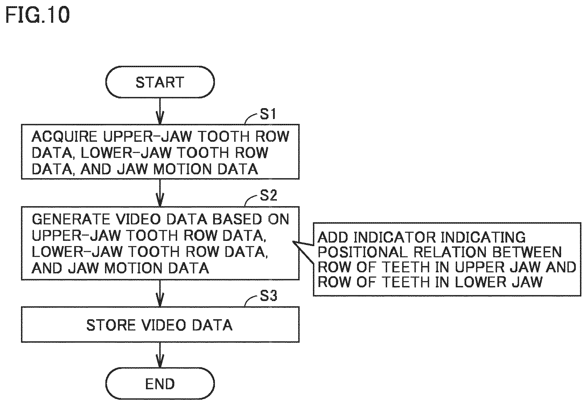

Data generation processing executed by data generating apparatus 1 according to the first embodiment will be hereinafter described with reference to Fig. 10. Fig. 10 is a flowchart for illustrating an example of the data generation processing executed by data generating apparatus 1 according to the first embodiment. Each STEP (hereinafter denoted as "S") shown in Fig. 10 is implemented by execution of data generating program 30 by computing device 11 of data generating apparatus 1.

As shown in Fig. 10, data generating apparatus 1 acquires upper-jaw tooth row data, lower-jaw tooth row data, and jaw motion data (S1). Data generating apparatus 1 generates video data based on the upper-jaw tooth row data, the lower-jaw tooth row data, and the jaw motion data that have been acquired (S2). When generating video data, as shown in Figs. 6 to 8, data generating apparatus 1 adds an indicator to the video of the jaw motion, the indicator indicating the positional relation between the rows of teeth in the upper and lower jaws that changes in accordance with the jaw motion. Data generating apparatus 1 stores the generated video data in storage device 13 (S3).

In this way, data generating apparatus 1 generates video data about the upper-jaw tooth row data or the lower-jaw tooth row data having an indicator added thereto indicating the positional relation between the rows of teeth in the upper and lower jaws that changes in accordance with the jaw motion, so that the user can check the position of contact between the upper and lower rows of teeth according to the positional relation between the row of teeth in the upper jaw and the row of teeth in the lower jaw during the jaw motion. Specifically, as shown in Figs. 6 to 8, based on a heat map with colors, the user can easily check the state in which the distance between the row of teeth in the upper jaw and the row of teeth in the lower jaw changes while the jaw motion is performed in a time-series manner.

Thereby, the user such as an operator can easily check the premature contact position of the upper and lower rows of teeth in the video showing that the rows of teeth in the upper and lower jaws move, so that the user can easily grasp which part of the rows of teeth in the upper and lower jaws should be treated for adjusting dental bite.

### <Second Embodiment>

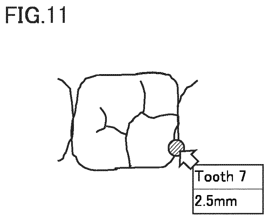

Data generating apparatus 1 according to the second embodiment will be hereinafter described with reference to Fig. 11. Note that the following describes only portions of data generating apparatus 1 according to the second embodiment that are different from those of data generating apparatus 1 according to the first embodiment, and the same parts as those of data generating apparatus 1 according to the first embodiment will be denoted by the same reference characters, and the description thereof will not be repeated.

Fig. 11 is a diagram for illustrating an example of an indicator added to video data by data generating apparatus 1 according to the second embodiment. As shown in Fig. 11, data generating apparatus 1 may display, as an indicator, the distance between each point in the point cloud constituting the row of teeth in the upper jaw and each point in the point cloud constituting the row of teeth in the lower jaw with respect to a point designated by the user from among the point cloud constituting the row of teeth in the upper jaw and the point cloud constituting the row of teeth in the lower jaw.

For example, when the user designates a desired point from among the point cloud constituting the row of teeth in the upper jaw and the point cloud constituting the row of teeth in the lower jaw in frame 41 on the side-surface side, frame 42 on the upper-jaw side, and frame 43 on the lower-jaw side, data generating apparatus 1 may add, to a point designated by the user (for example, a point in the row of teeth in the lower jaw), the distance between the point designated by the user (for example, the point in the row of teeth in the lower jaw) and a point facing this point designated by the user (for example, a point in the row of teeth in the upper jaw). Further, in frame 41 on the side-surface side, frame 42 on the upper-jaw side, and frame 43 on the lower-jaw side, data generating apparatus 1 may add information (for example, a tooth number) based on which the tooth corresponding to the point designated by the user can be specified.

Thus, the user designates a desired point from among the point cloud constituting the row of teeth in the upper jaw and the point cloud constituting the row of teeth in the lower jaw, and thereby can specify the tooth corresponding to the designated point and also can easily check the distance between the designated point and the point facing this designated point.

### <Third Embodiment>

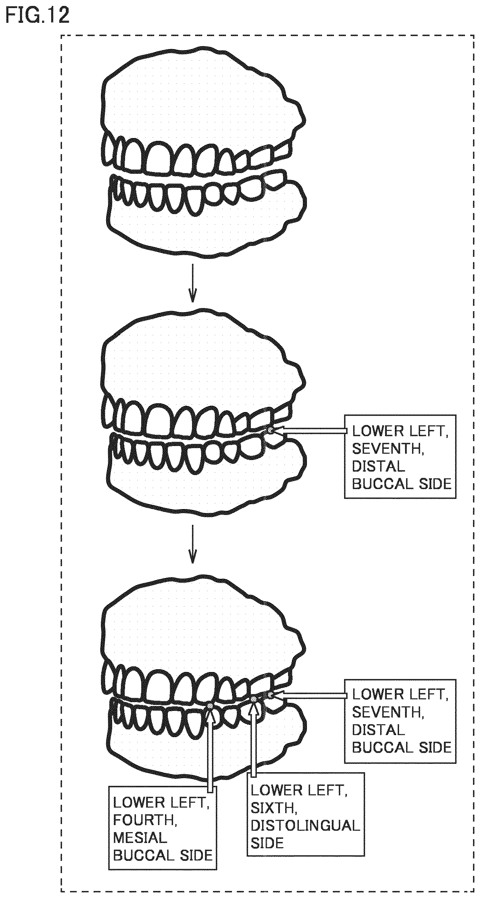

Data generating apparatus 1 according to the third embodiment will be hereinafter described with reference to Fig. 12. Note that the following describes only portions of data generating apparatus 1 according to the third embodiment that are different from those of data generating apparatus 1 according to the first embodiment, and the same parts as those of data generating apparatus 1 according to the first embodiment will be denoted by the same reference characters, and the description thereof will not be repeated.

Fig. 12 is a diagram for illustrating an example of an indicator added to video data by data generating apparatus 1 according to the third embodiment. As shown in Fig. 12, data generating apparatus 1 may add, as an indicator, information that makes it possible to specify a portion corresponding to a point at which the distance between the rows of teeth in the upper and lower jaws exceeds a threshold value, from among the point cloud constituting the row of teeth in the upper jaw and the point cloud constituting the row of teeth in the lower jaw. Note that the threshold value may be able to be set, for example, at 0 mm or 1mm by the user.

For example, in the case where the jaws move from the open state to the occlusal state, when the distance between the rows of teeth in the upper and lower jaws becomes shorter and exceeds the threshold value (for example, becomes 1 mm or less), then, data generating apparatus 1 may add, to the point at which the distance between the rows of teeth in the upper and lower jaws exceeds a threshold value, the tooth position, the tooth number and the like of the portion corresponding to this point. Then, when the distance between the rows of teeth in the upper and lower jaws becomes shorter due to the jaw motion to thereby increase the number of points at which this distance exceeds the threshold value, data generating apparatus 1 may sequentially add, to the points at which the distance exceeds the threshold value, the tooth position, the tooth number and the like of the portion corresponding to each of these points.

Thereby, the user can easily check the portion corresponding to the point at which the distance between the rows of teeth in the upper and lower jaws exceeds the threshold value during the jaw motion, and also can easily grasp the premature contact position and the order of contact. Thus, the user such as an operator can appropriately grasp which part of the row of teeth in the upper jaw and the row of teeth in the lower jaw should be treated in what order for adjusting dental bite.

### <Fourth Embodiment>

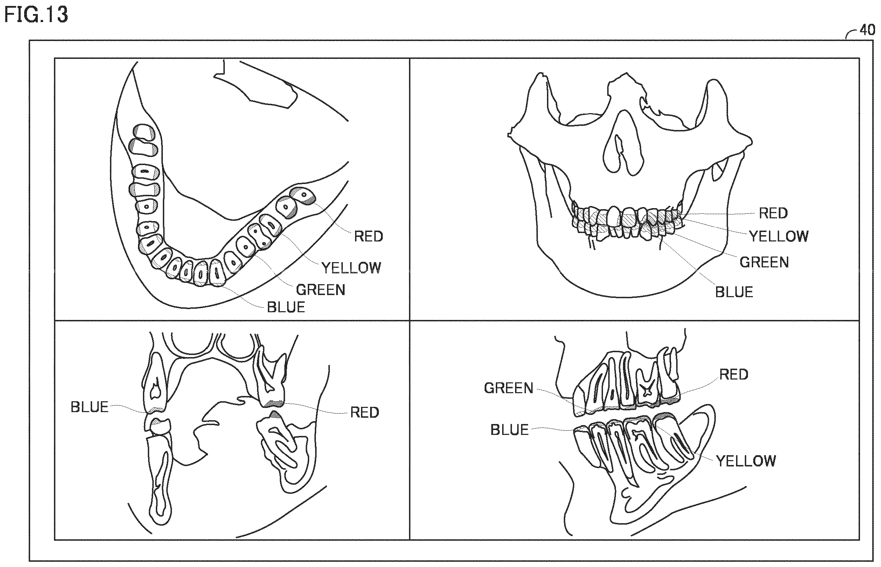

Data generating apparatus 1 according to the fourth embodiment will be hereinafter described with reference to Fig. 13. Note that the following describes only portions of data generating apparatus 1 according to the fourth embodiment that are different from those of data generating apparatus 1 according to the first embodiment, and the same parts as those of data generating apparatus 1 according to the first embodiment will be denoted by the same reference characters, and the description thereof will not be repeated.

Fig. 13 is a diagram for illustrating an example of an indicator added to video data by data generating apparatus 1 according to the fourth embodiment. As shown in Fig. 13, based on the upper-jaw tooth row data, the lower-jaw tooth row data, and the jaw motion data, data generating apparatus 1 may add an indicator to the video of the jaw motion showing the cross section of at least one of the row of teeth in the upper jaw and the row of teeth in the lower jaw.

For example, based on the three-dimensional volume (voxel) data of the upper and lower jaws obtained by the CT imaging apparatus, data generating apparatus 1 may generate video data showing a transverse cross section of the upper and lower rows of teeth viewed from above, a longitudinal cross section of the upper and lower rows of teeth viewed from the front, a longitudinal cross section of the upper and lower rows of teeth viewed from the lateral side, and the like. Then, data generating apparatus 1 may add different colors in each of the frames of the cross sections according to the distance between the rows of teeth in the upper and lower jaws.

Thereby, based on the video of the jaw motion showing the cross section of at least one of the row of teeth in the upper jaw and the row of teeth in the lower jaw, the user can easily check the positional relation between the rows of teeth in the upper and lower jaws during a jaw motion.

When data generating apparatus 1 calculates the distance between the rows of teeth in the upper and lower jaws based on the three-dimensional volume (voxel) data of the upper and lower jaws that has been obtained by the CT imaging apparatus, for example, data generating apparatus 1 should only calculate the distance between the center of the voxel representing the upper jaw and the center of the voxel representing the lower jaw and thereby calculate the distance between the row of teeth in the upper jaw and the row of teeth in the lower jaw.

### <Fifth Embodiment>

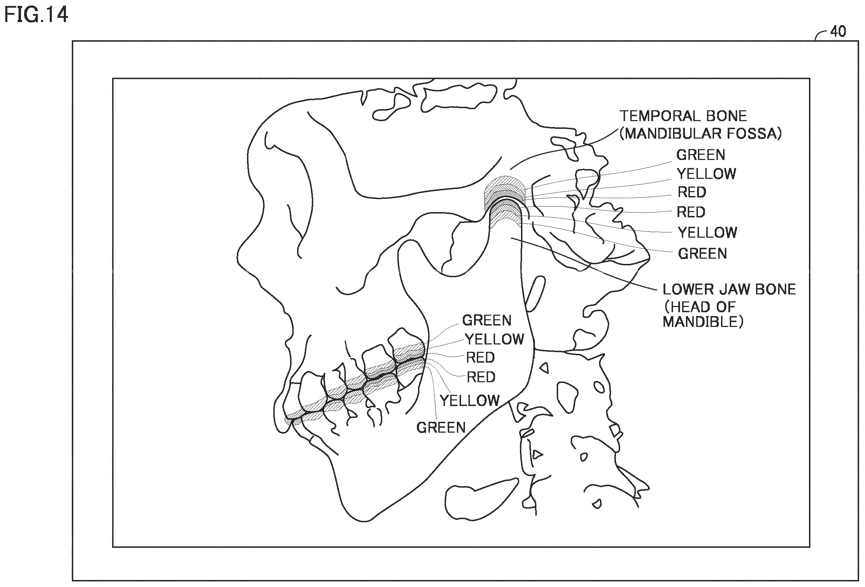

Data generating apparatus 1 according to the fifth embodiment will be hereinafter described with reference to Fig. 14. Note that the following describes only portions of data generating apparatus 1 according to the fifth embodiment that are different from those of data generating apparatus 1 according to the first embodiment, and the same parts as those of data generating apparatus 1 according to the first embodiment will be denoted by the same reference characters, and the description thereof will not be repeated.

Fig. 14 is a diagram for illustrating an example of an indicator added to video data by data generating apparatus 1 according to the fifth embodiment. As shown in Fig. 14, based on the upper-jaw tooth row data, the lower-jaw tooth row data, and the jaw motion data, data generating apparatus 1 may add an indicator indicating the positional relation between the jaw joints that changes in accordance with a jaw motion.

For example, based on the three-dimensional volume (voxel) data of the upper and lower jaws that has been obtained by the CT imaging apparatus, data generating apparatus 1 may generate video data showing a cranial bone during a jaw motion viewed from the left side surface, and add different colors in each frame according to the distance between the mandibular fossa in the temporal bone and the head of mandible in the lower jaw bone. Further, not only in the cranial bone during the jaw motion viewed from the left side surface but also in the cranial bone during the jaw motion viewed from the right side surface, data generating apparatus 1 may add different colors in each frame of the video data according to the distance between the mandibular fossa in the temporal bone and the head of mandible in the lower jaw bone. Further, data generating apparatus 1 may add an indicator so as to indicate the positional relation between the jaw joint on the left side-surface side and the jaw joint on the right side-surface side (for example, a displacement between these jaw joints).

Thereby, through the video of the jaw motion, the user can easily check the positional relation between the jaw joints that changes in accordance with the jaw motion.

### <Sixth Embodiment>

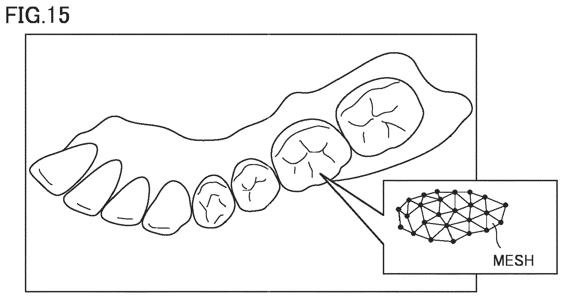

Data generating apparatus 1 according to the sixth embodiment will be hereinafter described with reference to Fig. 15. Note that the following describes only portions of data generating apparatus 1 according to the sixth embodiment that are different from those of data generating apparatus 1 according to the first embodiment, and the same parts as those of data generating apparatus 1 according to the first embodiment will be denoted by the same reference characters, and the description thereof will not be repeated.

Fig. 15 is a diagram for illustrating an example of an indicator added to video data by data generating apparatus 1 according to the sixth embodiment. As shown in Fig. 15, data generating apparatus 1 may generate at least one mesh constituting each of the row of teeth in the upper jaw and the row of teeth in the lower jaw based on the upper-jaw tooth row data and the lower-jaw tooth row data. For example, data generating apparatus 1 generates one mesh by connecting three or more points existing within a predetermined range by a straight line. In the example in Fig. 15, data generating apparatus 1 generates one triangular mesh by connecting three points by a straight line, but may generate one square mesh by connecting four points by a straight line, or may generate one mesh by connecting five or more points by a straight line.

Further, data generating apparatus 1 may add an indicator to an upper jaw-side mesh generated based on the point cloud constituting the row of teeth in the upper jaw and a lower jaw-side mesh generated based on the point cloud constituting the row of teeth in the lower jaw. For example, as shown in Figs. 6 to 8, data generating apparatus 1 may add different colors as indicators to the upper jaw-side mesh (for example, a triangular face) and the lower jaw-side mesh (for example, a triangular face) according to the distance between the upper jaw-side mesh and the lower jaw-side mesh.

For example, the upper jaw-side mesh has faces of triangular shape having vertices each represented by a corresponding point in the point cloud constituting the row of teeth in the upper jaw. The lower jaw-side mesh has faces of triangular shape having vertices each represented by a corresponding point in the point cloud constituting the row of teeth in the upper jaw. Data generating apparatus 1 may calculate a distance between a vertex of the upper jaw-side mesh and a vertex of the lower jaw-side mesh, and then add different colors to the upper jaw-side mesh and the lower jaw-side mesh according to the calculated distance.

Data generating apparatus 1 may calculate a distance between an arbitrary point on a face of the upper jaw-side mesh and an arbitrary point on a face of the lower jaw-side mesh, and then add different colors to the upper jaw-side mesh and the lower jaw-side mesh according to the calculated distance. Further, data generating apparatus 1 may calculate a distance between a vertex of the upper jaw-side mesh and an arbitrary point on a face of the lower jaw-side mesh, and then add different colors to the upper jaw-side mesh and the lower jaw-side mesh according to the calculated distance. Further, data generating apparatus 1 may calculate a distance between an arbitrary point on a face of the upper jaw-side mesh and a vertex of the lower jaw-side mesh, and then add different colors to the upper jaw-side mesh and the lower jaw-side mesh according to the calculated distance.

Further, the arbitrary point on the face of the upper jaw-side mesh may be the center of gravity, the incenter, or the circumcenter of a triangle having vertices each represented by a corresponding point in the point cloud constituting the row of teeth in the upper jaw. Further, the arbitrary point on the face of the lower jaw-side mesh may be the center of gravity, the incenter, or the circumcenter of a triangle having vertices each represented by a corresponding point in the point cloud constituting the row of teeth in the lower jaw.

As shown in Fig. 11, data generating apparatus 1 may add information (for example, a tooth number) as an indicator to the mesh designated by the user in frame 41 on the side-surface side, frame 42 on the upper-jaw side, and frame 43 on the lower-jaw side, in which the information makes it possible to specify the distance between the upper jaw-side mesh and the lower jaw-side mesh and also specify the tooth corresponding to the above-mentioned arbitrary point. Further, as shown in Fig. 12, data generating apparatus 1 may add information as an indicator in frame 41 on the side-surface side, frame 42 on the upper-jaw side, and frame 43 on the lower-jaw side, in which the information makes it possible to specify a portion corresponding to a point at which the distance between the upper jaw-side mesh and the lower jaw-side mesh is equal to or less than a threshold value.

### <Seventh Embodiment>

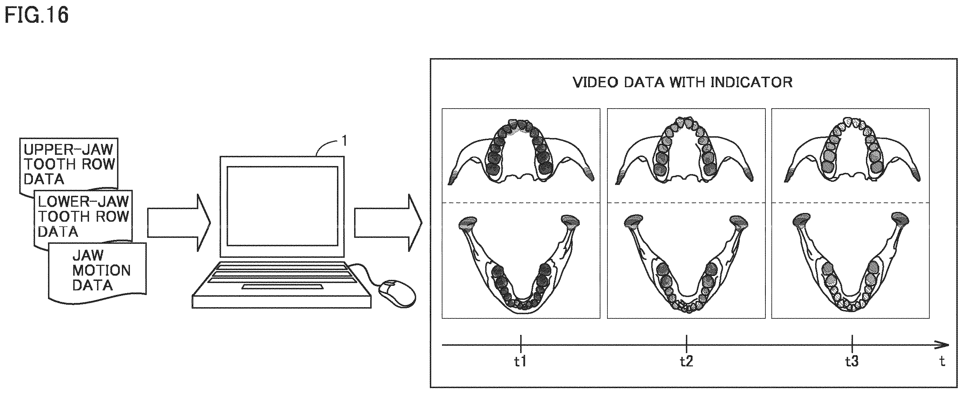

Data generating apparatus 1 according to the seventh embodiment will be hereinafter described with reference to Fig. 16. Note that the following describes only portions of data generating apparatus 1 according to the seventh embodiment that are different from those of data generating apparatus 1 according to the first embodiment, and the same parts as those of data generating apparatus 1 according to the first embodiment will be denoted by the same reference characters, and the description thereof will not be repeated.

Fig. 16 is a diagram for illustrating an example of an indicator added to video data by data generating apparatus 1 according to the seventh embodiment. As shown in Fig. 16, data generating apparatus 1 may add, to the video of the jaw motion, an indicator indicating the positional relation between the jaw joints that changes in accordance with the jaw motion, together with an indicator indicating the positional relation between the rows of teeth in the upper and lower jaws that changes in accordance with the jaw motion.

Thereby, the user such as an operator can simultaneously check the positional relation between the rows of teeth in the upper and lower jaws that changes in accordance with a jaw motion, as well as the positional relation between the jaw joints that changes in accordance with a jaw motion.

Data generating apparatuses 1 according to the above-described first to seventh embodiments each may have a configuration and a function of the other embodiments, alone or in combination.

It should be understood that the embodiments disclosed herein are illustrative and non-restrictive in every respect. The scope of the present invention is defined by the claimed subject-matter, rather than the description above, and is intended to include any modifications within the claimed subject-matter. The configurations illustrated in the present embodiments and the configurations illustrated in the modifications can be combined as appropriate.

## Claims

1. A data generating apparatus (1) configured to generate video data, the data generating apparatus comprising:
an input unit (14) configured to receive
upper-jaw tooth row data showing a three-dimensional shape of a row of teeth in an upper jaw,
lower-jaw tooth row data showing a three-dimensional shape of a row of teeth in a lower jaw, and
jaw motion data showing a jaw motion; and
a generation unit (11) configured to generate, based on the upper-jaw tooth row data, the lower-jaw tooth row data, and the jaw motion data, video data of at least one of the upper-jaw tooth row data and the lower-jaw tooth row data to which an indicator is added, the indicator indicating a positional relation between the row of teeth in the upper jaw and the row of teeth in the lower jaw, the positional relation changing in accordance with the jaw motion.

2. The data generating apparatus according to claim 1, wherein the generation unit is configured to add the indicator to each frame of a video of the jaw motion.

3. The data generating apparatus according to claim 1 or 2, wherein the generation unit is configured to add the indicator that is different according to a distance between each point in a point cloud constituting the row of teeth in the upper jaw and each point in a point cloud constituting the row of teeth in the lower jaw.

4. The data generating apparatus according to claim 3, wherein
the distance is
a first distance between a prescribed point constituting the row of teeth in the upper jaw and a point constituting the row of teeth in the lower jaw existing in a direction corresponding to a direction of the jaw motion starting from the prescribed point,
a second distance between the prescribed point constituting the row of teeth in the upper jaw and a point closest to the prescribed point in the point cloud constituting the row of teeth in the lower jaw, or
a third distance between the prescribed point constituting the row of teeth in the upper jaw and a point constituting the row of teeth in the lower jaw existing in a direction substantially perpendicular to a plane of a planar model selected by a user from among a plurality of planar models.

5. The data generating apparatus according to claim 4, wherein the generation unit is configured to add the indicator that is different according to a distance selected by the user from among the first distance and the second distance.

6. The data generating apparatus according to claim 1 or 2, wherein the generation unit is configured to add the indicator that is different according to a distance between an upper jaw-side mesh generated based on a point cloud constituting the row of teeth in the upper jaw and a lower jaw-side mesh generated based on a point cloud constituting the row of teeth in the lower jaw.

7. The data generating apparatus according to claim 6, wherein
the upper jaw-side mesh has a face having a triangular shape having vertices each represented by a corresponding point in the point cloud constituting the row of teeth in the upper jaw,
the lower jaw-side mesh has a face having a triangular shape having vertices each represented by a corresponding point in the point cloud constituting the row of teeth in the lower jaw, and
the distance is
a distance between a vertex of the upper jaw-side mesh and a vertex of the lower jaw-side mesh,
a distance between an arbitrary point on the face of the upper jaw-side mesh and an arbitrary point on the face of the lower jaw-side mesh,
a distance between a vertex of the upper jaw-side mesh and an arbitrary point on the face of the lower jaw-side mesh, or
a distance between an arbitrary point on the face of the upper jaw-side mesh and a vertex of the lower jaw-side mesh.

8. The data generating apparatus according to claim 7, wherein
the arbitrary point on the face of the upper jaw-side mesh includes a center of gravity, an incenter, or a circumcenter of a triangle having vertices each represented by a corresponding point in the point cloud constituting the row of teeth in the upper jaw, and
the arbitrary point on the face of the lower jaw-side mesh includes a center of gravity, an incenter, or a circumcenter of a triangle having vertices each represented by a corresponding point in the point cloud constituting the row of teeth in the lower jaw.

9. The data generating apparatus according to claim 3, wherein
the generation unit is configured to add a different color according to the distance as the indicator to
each point in the point cloud constituting the row of teeth in the upper jaw and each point in the point cloud constituting the row of teeth in the lower jaw, or
a mesh generated based on the point cloud constituting the row of teeth in the upper jaw and a mesh generated based on the point cloud constituting the row of teeth in the lower jaw.

10. The data generating apparatus according to claim 3, wherein
the generation unit is configured to add the distance as the indicator to
a point designated by a user from among the point cloud constituting the row of teeth in the upper jaw and the point cloud constituting the row of teeth in the lower jaw, or
a mesh designated by the user from among a mesh generated based on the point cloud constituting the row of teeth in the upper jaw and a mesh generated based on the point cloud constituting the row of teeth in the lower jaw.

11. The data generating apparatus according to claim 3, wherein the generation unit is configured to add, as the indicator, information that makes it possible to specify a portion corresponding to a point at which the distance exceeds a threshold value, from among the point cloud constituting the row of teeth in the upper jaw and the point cloud constituting the row of teeth in the lower jaw.

12. The data generating apparatus according to claim 1 or 2, wherein
a video of the jaw motion includes at least one of
a video showing the row of teeth in the upper jaw and the row of teeth in the lower jaw, when viewed from a side-surface side, and
a video showing the row of teeth in the upper jaw and the row of teeth in the lower jaw, when viewed from an occlusal-surface side of the upper jaw or from an occlusal-surface side of the lower jaw.

13. The data generating apparatus according to claim 1 or 2, wherein
the upper-jaw tooth row data includes at least one of
three-dimensional data including position information about each point in a point cloud constituting a surface of the row of teeth in the upper jaw, the three-dimensional data being acquired by a three-dimensional scanner, and
three-dimensional data obtained by computed tomography of the row of teeth in the upper jaw, and
the lower-jaw tooth row data includes at least one of
three-dimensional data including position information about each point in a point cloud constituting a surface of the row of teeth in the lower jaw, the three-dimensional data being acquired by the three-dimensional scanner, and
three-dimensional data obtained by computed tomography of the row of teeth in the lower jaw.

14. The data generating apparatus according to claim 1 or 2, wherein
the jaw motion data includes at least one of
data showing the jaw motion measured by a jaw motion measuring device, and
data obtained by simulating the jaw motion based on the upper-jaw tooth row data and the lower-jaw tooth row data.

15. The data generating apparatus according to claim 1 or 2, wherein the generation unit is configured to add the indicator in a video of the jaw motion, the indicator indicating a positional relation between jaw joints, the positional relation changing in accordance with the jaw motion.

16. The data generating apparatus according to claim 1 or 2, wherein the generation unit is configured to add the indicator to a video of the jaw motion, the video showing a cross section of at least one of the row of teeth in the upper jaw and the row of teeth in the lower jaw.

17. A data generating method for generating video data by a computer (11), the data generating method comprising, as processing to be executed by the computer:
acquiring
upper-jaw tooth row data showing a three-dimensional shape of a row of teeth in an upper jaw,
lower-jaw tooth row data showing a three-dimensional shape of a row of teeth in a lower jaw, and
jaw motion data showing a jaw motion; and
generating, based on the upper-jaw tooth row data, the lower-jaw tooth row data, and the jaw motion data, video data of at least one of the upper-jaw tooth row data and the lower-jaw tooth row data to which an indicator is added, the indicator indicating a positional relation between the row of teeth in the upper jaw and the row of teeth in the lower jaw, the positional relation changing in accordance with the jaw motion.

18. A data generating program (30) for generating video data of a jaw motion, the data generating program causing a computer (11) to:
acquire
upper-jaw tooth row data showing a three-dimensional shape of a row of teeth in an upper jaw,
lower-jaw tooth row data showing a three-dimensional shape of a row of teeth in a lower jaw, and
jaw motion data showing the jaw motion; and
generate, based on the upper-jaw tooth row data, the lower-jaw tooth row data, and the jaw motion data, video data of at least one of the upper-jaw tooth row data and the lower-jaw tooth row data to which an indicator is added, the indicator indicating a positional relation between the row of teeth in the upper jaw and the row of teeth in the lower jaw, the positional relation changing in accordance with the jaw motion.

## Patentansprüche

1. Datenerzeugungseinrichtung (1), die so konfiguriert ist, dass sie Videodaten erzeugt, wobei die Datenerzeugungseinrichtung aufweist:
eine Eingabeeinheit (14), die so konfiguriert ist, dass sie
Oberkieferzahnreihendaten, die eine dreidimensionale Form einer Reihe von Zähnen in einem Oberkiefer darstellen,
Unterkieferzahnreihendaten, die eine dreidimensionale Form einer Reihe von Zähnen in einem Unterkiefer darstellen, und
Kieferbewegungsdaten, die eine Kieferbewegung darstellen, empfängt; und
eine Erzeugungseinheit (11), die so konfiguriert ist, dass sie, basierend auf den Oberkieferzahnreihendaten, den Unterkieferzahnreihendaten und den Kieferbewegungsdaten, Videodaten der Oberkieferzahnreihendaten und/oder der Unterkieferzahnreihendaten erzeugt, zu denen ein Indikator hinzugefügt wird, wobei der Indikator eine Positionsbeziehung zwischen der Reihe von Zähnen im Oberkiefer und der Reihe von Zähnen im Unterkiefer angibt, wobei sich die Positionsbeziehung gemäß der Kieferbewegung ändert.

2. Datenerzeugungseinrichtung nach Anspruch 1, wobei die Erzeugungseinheit so konfiguriert ist, dass sie den Indikator zu jedem Frame eines Videos der Kieferbewegung hinzufügt.

3. Datenerzeugungseinrichtung nach Anspruch 1 oder 2, wobei die Erzeugungseinheit so konfiguriert ist, dass sie den Indikator hinzufügt, der sich gemäß einer Distanz zwischen jedem Punkt in einer die Reihe von Zähnen im Oberkiefer bildenden Punktwolke und jedem Punkt in einer die Reihe von Zähnen im Unterkiefer bildenden Punktwolke unterscheidet.

4. Datenerzeugungseinrichtung nach Anspruch 3, wobei es sich bei der Distanz um
eine erste Distanz zwischen einem vorgeschriebenen Punkt, der die Reihe von Zähnen im Oberkiefer bildet, und einem Punkt, der die Reihe von Zähnen im Unterkiefer bildet, die in einer Richtung entsprechend einer Richtung der Kieferbewegung vom vorgeschriebenen Punkt aus beginnend vorliegt,
eine zweite Distanz zwischen dem vorgeschriebenen Punkt, der die Reihe von Zähnen im Oberkiefer bildet, und einem dem vorgeschriebenen Punkt nächstgelegenen Punkt in der die Reihe von Zähnen im Unterkiefer bildenden Punktwolke oder
eine dritte Distanz zwischen dem vorgeschriebenen Punkt, der die Reihe von Zähnen im Oberkiefer bildet, und einem Punkt, der die Reihe von Zähnen im Unterkiefer bildet, die in einer Richtung im Wesentlichen senkrecht zu einer Ebene eines von einem Nutzer aus einer Vielzahl planarer Modelle ausgewählten planaren Modells vorliegt, handelt.

5. Datenerzeugungseinrichtung nach Anspruch 4, wobei die Erzeugungseinheit so konfiguriert ist, dass sie den Indikator hinzufügt, der sich gemäß einer vom Nutzer aus der ersten Distanz und der zweiten Distanz ausgewählten Distanz unterscheidet.

6. Datenerzeugungseinrichtung nach Anspruch 1 oder 2, wobei die Erzeugungseinheit so konfiguriert ist, dass sie den Indikator hinzufügt, der sich gemäß einer Distanz zwischen einem oberkieferseitigen Netz, das basierend auf einer die Reihe von Zähnen im Oberkiefer bildenden Punktwolke erzeugt wird, und einem unterkieferseitigen Netz, das basierend auf einer die Reihe von Zähnen im Unterkiefer bildenden Punktwolke erzeugt wird, unterscheidet.

7. Datenerzeugungseinrichtung nach Anspruch 6, wobei
das oberkieferseitige Netz eine Fläche mit einer dreieckigen Form mit Eckpunkten aufweist, die jeweils durch einen entsprechenden Punkt in der die Reihe von Zähnen im Oberkiefer bildenden Punktwolke repräsentiert werden,
das unterkieferseitige Netz eine Fläche mit einer dreieckigen Form mit Eckpunkten aufweist, die jeweils durch einen entsprechenden Punkt in der die Reihe von Zähnen im Unterkiefer bildenden Punktwolke repräsentiert werden, und
es sich bei der Distanz um
eine Distanz zwischen einem Eckpunkt des oberkieferseitigen Netzes und einem Eckpunkt des unterkieferseitigen Netzes,
eine Distanz zwischen einem beliebigen Punkt auf der Fläche des oberkieferseitigen Netzes und einem beliebigen Punkt auf der Fläche des unterkieferseitigen Netzes oder
eine Distanz zwischen einem beliebigen Punkt auf der Fläche des oberkieferseitigen Netzes und einem Eckpunkt des unterkieferseitigen Netzes handelt.

8. Datenerzeugungseinrichtung nach Anspruch 7, wobei
der beliebige Punkt auf der Fläche des oberkieferseitigen Netzes einen Schwerpunkt, einen Inkreismittelpunkt oder einen Umkreismittelpunkt eines Dreiecks mit Eckpunkten umfasst, die jeweils durch einen entsprechenden Punkt in der die Reihe von Zähnen im Oberkiefer bildenden Punktwolke repräsentiert werden, und
der beliebige Punkt auf der Fläche des unterkieferseitigen Netzes einen Schwerpunkt, einen Inkreismittelpunkt oder einen Umkreismittelpunkt eines Dreiecks mit Eckpunkten umfasst, die jeweils durch einen entsprechenden Punkt in der die Reihe von Zähnen im Unterkiefer bildenden Punktwolke repräsentiert werden,

9. Datenerzeugungseinrichtung nach Anspruch 3, wobei
die Erzeugungseinheit so konfiguriert ist, dass sie eine unterschiedliche Farbe gemäß der Distanz als den Indikator zu
jedem Punkt in der die Reihe von Zähnen im Oberkiefer bildenden Punktwolke und jedem Punkt in der die Reihe von Zähnen im Unterkiefer bildenden Punktwolke oder
einem Netz, das basierend auf der die Reihe von Zähnen im Oberkiefer bildenden Punktwolke erzeugt wird, und einem Netz, das basierend auf der Reihe von Zähnen im Unterkiefer bildenden Punktwolke erzeugt wird,
hinzufügt.

10. Datenerzeugungseinrichtung nach Anspruch 3, wobei
die Erzeugungseinheit so konfiguriert ist, dass sie die Distanz als den Indikator zu
einem Punkt, der von einem Nutzer aus der die Reihe von Zähnen im Oberkiefer bildenden Punktwolke und der die Reihe von Zähnen im Unterkiefer bildenden Punktwolke bezeichnet wird, oder
einem Netz, das vom Nutzer aus einem basierend auf der die Reihe von Zähnen im Oberkiefer bildenden Punktwolke erzeugten Netz und einem basierend auf der die Reihe von Zähnen im Unterkiefer bildenden Punktwolke erzeugten Netz bezeichnet wird,
hinzufügt.

11. Datenerzeugungseinrichtung nach Anspruch 3, wobei die Erzeugungseinheit so konfiguriert ist, dass sie als den Indikator eine Information hinzufügt, die es möglich macht, einen Teil entsprechend einem Punkt, an dem die Distanz einen Schwellenwert überschreitet, aus der die Reihe von Zähnen im Oberkiefer bildenden Punktwolke und der die Reihe von Zähnen im Unterkiefer bildenden Punktwolke zu spezifizieren.

12. Datenerzeugungseinrichtung nach Anspruch 1 oder 2, wobei ein Video der Kieferbewegung
ein Video, das die Reihe von Zähnen im Oberkiefer und die Reihe von Zähnen im Unterkiefer, von einer Seite einer seitlichen Oberfläche aus betrachtet, darstellt, und/oder
ein Video, das die Reihe von Zähnen im Oberkiefer und die Reihe von Zähnen im Unterkiefer, von einer Seite einer Okklusionsoberfläche des Oberkiefers oder von einer Seite einer Okklusionsoberfläche des Unterkiefers aus betrachtet, darstellt,
umfasst.

13. Datenerzeugungseinrichtung nach Anspruch 1 oder 2, wobei die Oberkieferzahnreihendaten
dreidimensionale Daten, die Positionsinformationen über jeden Punkt in einer eine Oberfläche der Reihe von Zähnen im Oberkiefer bildenden Punktwolke enthalten, wobei die dreidimensionalen Daten mittels eines dreidimensionalen Scanners erfasst werden, und/oder
dreidimensionale Daten umfassen, die mittels Computer-Tomographie der Reihe von Zähnen im Oberkiefer erhalten werden, und
die Unterkieferzahnreihendaten
dreidimensionale Daten, die Positionsinformationen über jeden Punkt in einer eine Oberfläche der Reihe von Zähnen im Unterkiefer bildenden Punktwolke enthalten, wobei die dreidimensionalen Daten mittels des dreidimensionalen Scanners erfasst werden, und/oder
dreidimensionale Daten umfassen, die mittels Computer-Tomographie der Reihe von Zähnen im Unterkiefer erhalten werden.

14. Datenverarbeitungseinrichtung nach Anspruch 1 oder 2, wobei die Kieferbewegungsdaten
Daten, die die mittels einer eine Kieferbewegung messenden Vorrichtung gemessene Kieferbewegung darstellen, und/oder
Daten, die durch Simulieren der Kieferbewegung basierend auf den Oberkieferzahnreihendaten und den Unterkieferzahnreihendaten erhalten werden,
umfasst.

15. Datenerzeugungseinrichtung nach Anspruch 1 oder 2, wobei die Erzeugungseinheit so konfiguriert ist, dass sie den Indikator in einem Video der Kieferbewegung hinzufügt, wobei der Indikator eine Positionsbeziehung zwischen Kiefergelenken angibt, wobei sich die Positionsbeziehung gemäß der Kieferbewegung ändert.

16. Datenerzeugungseinrichtung nach Anspruch 1 oder 2, wobei die Erzeugungseinheit so konfiguriert ist, dass sie den Indikator zu einem Video der Kieferbewegung hinzufügt, wobei das Video einen Querschnitt der Reihe von Zähnen im Oberkiefer und/oder der Reihe von Zähnen im Unterkiefer darstellt.

17. Datenerzeugungsverfahren zum Erzeugen von Videodaten mittels eines Computers (11), wobei das Datenerzeugungsverfahren, als eine vom Computer auszuführende Verarbeitung, aufweist:
Erfassen von
Oberkieferzahnreihendaten, die eine dreidimensionale Form einer Reihe von Zähnen in einem Oberkiefer darstellen,
Unterkieferzahnreihendaten, die eine dreidimensionale Form einer Reihe von Zähnen in einem Unterkiefer darstellen, und
Kieferbewegungsdaten, die eine Kieferbewegung darstellen; und
Erzeugen, basierend auf den Oberkieferzahnreihendaten, den Unterkieferzahnreihendaten und den Kieferbewegungsdaten, von Videodaten der Oberkieferzahnreihendaten und/oder der Unterkieferzahnreihendaten, zu denen ein Indikator hinzugefügt wird, wobei der Indikator eine Positionsbeziehung zwischen der Reihe von Zähnen im Oberkiefer und der Reihe von Zähnen im Unterkiefer angibt, wobei sich die Positionsbeziehung gemäß der Kieferbewegung ändert.

18. Datenerzeugungsprogramm (30) zum Erzeugen von Videodaten einer Kieferbewegung, wobei das Datenerzeugungsprogramm veranlasst, dass ein Computer (11):
Oberkieferzahnreihendaten, die eine dreidimensionale Form einer Reihe von Zähnen in einem Oberkiefer darstellen,
Unterkieferzahnreihendaten, die eine dreidimensionale Form einer Reihe von Zähnen in einem Unterkiefer darstellen, und
Kieferbewegungsdaten, die die Kieferbewegung darstellen, erfasst; und
basierend auf den Oberkieferzahnreihendaten, den Unterkieferzahnreihendaten und den Kieferbewegungsdaten, Videodaten der Oberkieferzahnreihendaten und/oder der Unterkieferzahnreihendaten erzeugt, zu denen ein Indikator hinzugefügt wird, wobei der Indikator eine Positionsbeziehung zwischen der Reihe von Zähnen im Oberkiefer und der Reihe von Zähnen im Unterkiefer angibt, wobei sich die Positionsbeziehung gemäß der Kieferbewegung ändert.

## Revendications

1. Appareil de génération de données (1) configuré pour générer des données vidéo, l'appareil de génération de données comprenant :
une unité d'entrée (14) configurée pour recevoir
des données de rangée de dents de mâchoire supérieure montrant une forme tridimensionnelle d'une rangée de dents dans une mâchoire supérieure,
des données de rangée de dents de mâchoire inférieure montrant une forme tridimensionnelle d'une rangée de dents dans une mâchoire inférieure, et
des données de mouvement de mâchoire montrant un mouvement de mâchoire ; et
une unité de génération (11) configurée pour générer, sur la base des données de rangée de dents de mâchoire supérieure, des données de rangée de dents de mâchoire inférieure et des données de mouvement de mâchoire, des données vidéo d'au moins un élément parmi des données de rangée de dents de mâchoire supérieure et des données de rangée de dents de mâchoire inférieure auxquelles est ajouté un indicateur, l'indicateur indiquant une relation de position entre la rangée de dents dans la mâchoire supérieure et la rangée de dents dans la mâchoire inférieure, la relation de position changeant en fonction du mouvement de mâchoire.

2. Appareil de génération de données selon la revendication 1, dans lequel l'unité de génération est configurée pour ajouter l'indicateur à chaque trame d'une vidéo du mouvement de mâchoire.

3. Appareil de génération de données selon la revendication 1 ou 2, dans lequel l'unité de génération est configurée pour ajouter l'indicateur qui est différent selon une distance entre chaque point dans un nuage de points constituant la rangée de dents dans la mâchoire supérieure et chaque point dans un nuage de points constituant la rangée de dents dans la mâchoire inférieure.

4. Appareil de génération de données selon la revendication 3, dans lequel la distance est
une première distance entre un point prescrit constituant la rangée de dents dans la mâchoire supérieure et un point constituant la rangée de dents dans la mâchoire inférieure existant dans une direction correspondant à une direction du mouvement de mâchoire à partir du point prescrit,
une deuxième distance entre le point prescrit constituant la rangée de dents dans la mâchoire supérieure et un point le plus proche du point prescrit dans le nuage de points constituant la rangée de dents dans la mâchoire inférieure, ou
une troisième distance entre le point prescrit constituant la rangée de dents dans la mâchoire supérieure et un point constituant la rangée de dents dans la mâchoire inférieure existant dans une direction sensiblement perpendiculaire à un plan d'un modèle planaire sélectionné par un utilisateur parmi une pluralité de modèles planaires.

5. Appareil de génération de données selon la revendication 4, dans lequel l'unité de génération est configurée pour ajouter l'indicateur qui est différent selon une distance sélectionnée par l'utilisateur parmi la première distance et la deuxième distance.

6. Appareil de génération de données selon la revendication 1 ou 2, dans lequel l'unité de génération est configurée pour ajouter l'indicateur qui est différent selon une distance entre un maillage côté mâchoire supérieure généré sur la base d'un nuage de points constituant la rangée de dents dans la mâchoire supérieure et un maillage côté mâchoire inférieure généré sur la base d'un nuage de points constituant la rangée de dents dans la mâchoire inférieure.

7. Appareil de génération de données selon la revendication 6, dans lequel
le maillage côté mâchoire supérieure présente une face ayant une forme triangulaire ayant des sommets dont chacun est représenté par un point correspondant dans le nuage de points constituant la rangée de dents dans la mâchoire supérieure,
le maillage côté mâchoire inférieure présente une face ayant une forme triangulaire ayant des sommets dont chacun est représenté par un point correspondant dans le nuage de points constituant la rangée de dents dans la mâchoire inférieure, et
la distance est
une distance entre un sommet du maillage côté mâchoire supérieure et un sommet du maillage côté mâchoire inférieure,
une distance entre un point arbitraire sur la face du maillage côté mâchoire supérieure et un point arbitraire sur la face du maillage côté mâchoire inférieure,
une distance entre un sommet du maillage côté mâchoire supérieure et un point arbitraire sur la face du maillage côté mâchoire inférieure, ou
une distance entre un point arbitraire sur la face du maillage côté mâchoire supérieure et un sommet du maillage côté mâchoire inférieure.

8. Appareil de génération de données selon la revendication 7, dans lequel
le point arbitraire sur la face du maillage côté mâchoire supérieure comporte un centre de gravité, un centre du cercle inscrit ou un centre du cercle circonscrit d'un triangle ayant des sommets dont chacun est représenté par un point correspondant dans le nuage de points constituant la rangée de dents dans la mâchoire supérieure, et
le point arbitraire sur la face du maillage côté mâchoire inférieure comporte un centre de gravité, un centre du cercle inscrit ou un centre du cercle circonscrit d'un triangle ayant des sommets dont chacun est représenté par un point correspondant dans le nuage de points constituant la rangée de dents dans la mâchoire inférieure.

9. Appareil de génération de données selon la revendication 3, dans lequel
l'unité de génération est configurée pour ajouter, en tant qu'indicateur, une couleur différente selon la distance à
chaque point dans le nuage de points constituant la rangée de dents dans la mâchoire supérieure et chaque point dans le nuage de points constituant la rangée de dents dans la mâchoire inférieure, ou
un maillage généré sur la base du nuage de points constituant la rangée de dents dans la mâchoire supérieure et un maillage généré sur la base du nuage de points constituant la rangée de dents dans la mâchoire inférieure.

10. Appareil de génération de données selon la revendication 3, dans lequel
l'unité de génération est configurée pour ajouter, en tant qu'indicateur, la distance à
un point désigné par un utilisateur parmi le nuage de points constituant la rangée de dents dans la mâchoire supérieure et le nuage de points constituant la rangée de dents dans la mâchoire inférieure, ou
un maillage désigné par l'utilisateur parmi un maillage généré sur la base du nuage de points constituant la rangée de dents dans la mâchoire supérieure et un maillage généré sur la base du nuage de points constituant la rangée de dents dans la mâchoire inférieure.

11. Appareil de génération de données selon la revendication 3, dans lequel l'unité de génération est configurée pour ajouter, en tant qu'indicateur, des informations qui permettent de spécifier une partie correspondant à un point auquel la distance dépasse une valeur seuil, parmi le nuage de points constituant la rangée de dents dans la mâchoire supérieure et le nuage de points constituant la rangée de dents dans la mâchoire inférieure.

12. Appareil de génération de données selon la revendication 1 ou 2, dans lequel
une vidéo du mouvement de mâchoire comporte au moins l'une parmi
une vidéo montrant la rangée de dents dans la mâchoire supérieure et la rangée de dents dans la mâchoire inférieure, vues d'un côté de la surface latérale, et
une vidéo montrant la rangée de dents dans la mâchoire supérieure et la rangée de dents dans la mâchoire inférieure, vues d'un côté de la surface occlusale de la mâchoire supérieure ou d'un côté de la surface occlusale de la mâchoire inférieure.

13. Appareil de génération de données selon la revendication 1 ou 2, dans lequel
les données de rangée de dents de mâchoire supérieure comportent au moins un élément parmi
des données tridimensionnelles comportant des informations de position sur chaque point dans un nuage de points constituant une surface de la rangée de dents dans la mâchoire supérieure, les données tridimensionnelles étant acquises par un scanner tridimensionnel, et
des données tridimensionnelles obtenues par tomodensitométrie de la rangée de dents dans la mâchoire supérieure, et
les données de rangée de dents de mâchoire inférieure comportent au moins un élément parmi
des données tridimensionnelles comportant des informations de position sur chaque point dans un nuage de points constituant une surface de la rangée de dents dans la mâchoire inférieure, les données tridimensionnelles étant acquises par le scanner tridimensionnel, et
des données tridimensionnelles obtenues par tomodensitométrie de la rangée de dents dans la mâchoire inférieure.

14. Appareil de génération de données selon la revendication 1 ou 2, dans lequel
les données de mouvement de mâchoire comportent au moins un élément parmi
des données montrant le mouvement de mâchoire mesuré par un dispositif de mesure de mouvement de mâchoire, et
des données obtenues par simulation du mouvement de mâchoire sur la base des données de rangée de dents de mâchoire supérieure et des données de rangée de dents de mâchoire inférieure.

15. Appareil de génération de données selon la revendication 1 ou 2, dans lequel l'unité de génération est configurée pour ajouter l'indicateur dans une vidéo du mouvement de mâchoire, l'indicateur indiquant une relation de position entre des articulations de mâchoire, la relation de position changeant conformément au mouvement de mâchoire.

16. Appareil de génération de données selon la revendication 1 ou 2, dans lequel l'unité de génération est configurée pour ajouter l'indicateur à une vidéo du mouvement de mâchoire, la vidéo montrant une section transversale d'au moins l'une de la rangée de dents dans la mâchoire supérieure et de la rangée de dents dans la mâchoire inférieure.

17. Procédé de génération de données pour générer des données vidéo au moyen d'un ordinateur (11), le procédé de génération de données comprenant, en tant que traitement à exécuter par l'ordinateur :
l'acquisition
de données de rangée de dents de mâchoire supérieure montrant une forme tridimensionnelle d'une rangée de dents dans une mâchoire supérieure,
de données de rangée de dents de mâchoire inférieure montrant une forme tridimensionnelle d'une rangée de dents dans une mâchoire inférieure, et
de données de mouvement de mâchoire montrant un mouvement de mâchoire ; et
la génération, sur la base des données de rangée de dents de mâchoire supérieure, des données de rangée de dents de mâchoire inférieure et des données de mouvement de mâchoire, de données vidéo d'au moins un élément parmi des données de rangée de dents de mâchoire supérieure et des données de rangée de dents de mâchoire inférieure auxquelles est ajouté un indicateur, l'indicateur indiquant une relation de position entre la rangée de dents dans la mâchoire supérieure et la rangée de dents dans la mâchoire inférieure, la relation de position changeant en fonction du mouvement de mâchoire.

18. Programme de génération de données (30) pour générer des données vidéo d'un mouvement de mâchoire, le programme de génération de données amenant un ordinateur (11) à :
acquérir
des données de rangée de dents de mâchoire supérieure montrant une forme tridimensionnelle d'une rangée de dents dans une mâchoire supérieure,
des données de rangée de dents de mâchoire inférieure montrant une forme tridimensionnelle d'une rangée de dents dans une mâchoire inférieure, et
des données de mouvement de mâchoire montrant le mouvement de mâchoire ; et
générer, sur la base des données de rangée de dents de mâchoire supérieure, des données de rangée de dents de mâchoire inférieure et des données de mouvement de mâchoire, des données vidéo d'au moins un élément parmi des données de rangée de dents de mâchoire supérieure et des données de rangée de dents de mâchoire inférieure auxquelles est ajouté un indicateur, l'indicateur indiquant une relation de position entre la rangée de dents dans la mâchoire supérieure et la rangée de dents dans la mâchoire inférieure, la relation de position changeant en fonction du mouvement de mâchoire.
